(19)

Europäisches
Patentamt
European
Patent Office
Office européen
des brevets

(11) **EP 4 734 458 A1**

(12) **EUROPEAN PATENT APPLICATION**
published in accordance with Art. 153(4) EPC

(43) Date of publication:
29.04.2026 Bulletin 2026/18

(21) Application number: 24829927.3

(22) Date of filing: 05.03.2024

(51) International Patent Classification (IPC):
H04L 25/02 (2006.01)        H04L 67/104 (2022.01)
H04W 4/70 (2018.01)

(52) Cooperative Patent Classification (CPC):
H04B 7/0413; H04B 7/06; H04L 25/02;
H04L 67/104; H04W 4/70; H04W 16/18

(86) International application number:
PCT/CN2024/080023

(87) International publication number:
WO 2025/001274 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 27.06.2023 CN 202310773308

(71) Applicant: ZTE CORPORATION
Shenzhen, Guangdong 518057 (CN)

(72) Inventor: ZHANG, Yongliang
Shenzhen, Guangdong 518057 (CN)

(74) Representative: Ziebig Hengelhaupt Intellectual
Property Attorneys
Patentanwaltskanzlei PartGmbB
Leipziger Straße 49
10117 Berlin (DE)

(54) **RECONFIGURABLE INTELLIGENCE SURFACE APPARATUS AND TERMINAL COMMUNICATION METHOD**

(57) Provided in the present application are a reconfigurable intelligence surface apparatus and a terminal communication method. The reconfigurable intelligence surface apparatus is provided in a terminal, and the apparatus comprises a plurality of individual reconfigurable intelligence surfaces, the plurality of individual reconfigurable intelligence surfaces each comprising a folded state and an unfolded state, wherein in the folded state, the plurality of individual reconfigurable intelligence surfaces are folded in the terminal, and the apparatus is used for assisting the terminal in performing uplink communication; and in the unfolded state, the plurality of individual reconfigurable intelligence surfaces extend outwards from the interior of the terminal, and the apparatus is used for assisting the terminal and/or a peripheral terminal of the terminal in performing downlink communication.

FIG. 1

## Description

CROSS-REFERENCE TO RELATED APPLICATIONS

The present application claims priority to the Chinese Patent Application No. 202310773308.9, filed to the CNIPA on June 27, 2023 and entitled "RECONFIGURABLE INTELLIGENCE SURFACE APPARATUS AND TERMINAL COMMUNICATION METHOD", the entire contents of which are incorporated herein by reference.

TECHNICAL FIELD

The present application relates to the technical field of communications, in particular to a reconfigurable intelligence surface apparatus and a terminal communication method.

BACKGROUND

A reconfigurable intelligence surface (RIS), also known as an intelligent metasurface, is an artificial electromagnetic surface structure having a programmable electromagnetic characteristic, and is composed of a large quantity of well-designed arranged electromagnetic units, electromagnetic properties of the electromagnetic units may be adjusted and controlled dynamically by a control circuit, and intelligent reconfiguration of a wireless signal propagation characteristic in a three-dimensional space is implemented. The reconfigurable intelligence surface may usually assist a base station in performing downlink communication, so as to enhance signal quality and the like of a downlink signal received by a terminal. However, in an actual application scenario, for a terminal, while the terminal performs uplink communication or downlink communication, there is usually a demand of performing uplink enhancement or downlink enhancement, and in view of a characteristic of the reconfigurable intelligence surface, a combination of the reconfigurable intelligence surface and the terminal may effectively assist the terminal in performing the communication.

## SUMMARY

In a first aspect, a reconfigurable intelligence surface apparatus is provided. The apparatus is arranged in a terminal and includes a plurality of individual reconfigurable intelligence surfaces, where the plurality of individual reconfigurable intelligence surfaces include a folded state and an unfolded state; in the folded state, the plurality of individual reconfigurable intelligence surfaces are folded in the terminal, and the apparatus is configured to assist the terminal in performing uplink communication; and in the unfolded state, the plurality of individual reconfigurable intelligence surfaces extend outwards from an interior of the terminal, and the apparatus is configured to assist the terminal and/or a peripheral terminal of the terminal in performing downlink communication.

In a second aspect, a terminal communication method is provided and applied to a terminal, where the reconfigurable intelligence surface apparatus as described in the first aspect is arranged in the terminal, and the method includes: acquiring communication information of the terminal; and determining an operating state of a plurality of individual reconfigurable intelligence surfaces according to the communication information of the terminal, wherein the operating state is a folded state or an unfolded state.

In a third aspect, an electronic device is provided, including: a processor; and a memory, configured to store processor-executable instructions, wherein the processor is configured to executed the instructions to implement the method described in the second aspect.

In a fourth aspect, a computer-readable storage medium is provided, wherein instructions in the storage medium, when executed by a processor of an electronic device, cause the electronic device to perform the method as described in the second aspect.

In a fifth aspect, a terminal is provided, wherein the reconfigurable intelligence surface apparatus as described in the first aspect is arranged in the terminal.

## BRIEF DESCRIPTION OF DRAWING(S)

For more clearly describing the technical solutions in the embodiments of the present application or in the prior art, accompanying drawings needed in the descriptions of the embodiments or the prior art are briefly introduced below. Apparently, the accompanying drawings in the following descriptions are only some embodiments recorded in the present application. Those ordinarily skilled in the art can also obtain other accompanying drawings according to these accompanying drawings without making creative efforts.

FIG. 1 is a schematic structural diagram of a reconfigurable intelligence surface apparatus according to an embodiment of the present application.

FIG. 2 is a schematic diagram of a plurality of individual reconfigurable intelligence surfaces in a folded state and an unfolded state according to an embodiment of the present application.

FIG. 3 is a schematic diagram of three individual reconfigurable intelligence surfaces in a folded state according to an embodiment of the present application.

FIG. 4 is a schematic diagram of three individual reconfigurable intelligence surfaces switched from a folded state to an unfolded state according to an embodiment of the present application.

FIG. 5 is a schematic diagram of controlling three individual reconfigurable intelligence surfaces to be in a non-tiled state according to an embodiment of the present application.

FIG. 6 is a schematic diagram of five individual reconfigurable intelligence surfaces switched from a folded state to an unfolded state according to an embodiment of the present application.

FIG. 7 is a schematic flowchart of a terminal communication method according to an embodiment of the present application.

FIG. 8 is a schematic diagram of a reconfigurable intelligence surface apparatus used for uplink enhancement according to an embodiment of the present application.

FIG. 9 is a schematic diagram of a reconfigurable intelligence surface apparatus used for downlink enhancement according to an embodiment of the present application.

FIG. 10 is a schematic diagram of a perpendicular incidence diameter and a direct connection diameter of a plurality of individual reconfigurable intelligence surfaces in a single-layer tiled state according to an embodiment of the present application.

FIG. 11 is a schematic diagram of a terminal performing uplink enhancement and downlink enhancement based on a reconfigurable intelligence surface according to an embodiment of the present application.

FIG. 12 is a schematic flowchart of a terminal communication method according to an embodiment of the present application.

FIG. 13 is a schematic structural diagram of an electronic device according to an embodiment of the present application.

FIG. 14 is a schematic structural diagram of a terminal communication apparatus according to an embodiment of the present application.

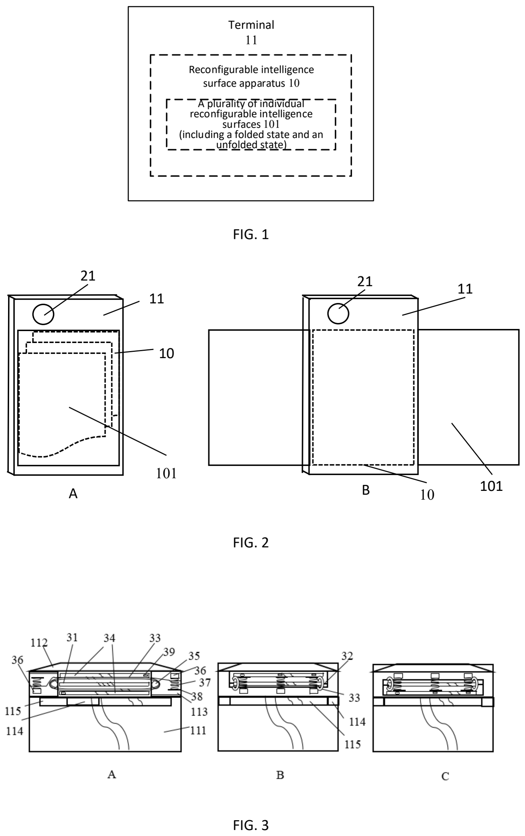

Correspondence between reference numerals and names of components in FIG. 1 to FIG. 6 is as following.

10 Reconfigurable intelligence surface apparatus, 11 Terminal, 101 Individual reconfigurable intelligence surface, 21 Camera or other auxiliary peripheral device, 111 Middle frame, 112 Shell, 113 Side wall outlet, 114 Antenna, 115 Main board, 31 Fixed metasurface, 32 Fixed shaft, 33 Crawler belt, 34 Movable metasurface, 35 First motor, 36 Electromagnet, 361 Backup electromagnet, 37 Spring, 38 Horizontal support, and 39 Permanent magnet.

## DETAILED DESCRIPTION

For making those skilled in the art better understand the technical solutions in the embodiments of the present application, the technical solutions in the embodiments of the present application are described clearly and completely below with reference to the accompanying drawings in one or more embodiments of the present application. Apparently, the described embodiments are only some embodiments rather than all of the embodiments in the present application. All other embodiments obtained by those ordinarily skilled in the art based on the embodiments in the present application without making creative efforts should fall within the scope of protection of the document.

Terms such as "first" and "second" in the present application and the claims are used for distinguishing similar objects but not for describing a specific sequence or precedence order. It is to be understood that data used like this may be interchanged in an appropriate case so that the embodiments of the present application can be implemented in an order other than those illustrated or described here. In addition, "and/or" in the present application and the claims represents at least one of connected objects, and a character "/" generally represents an "or" relationship between associated objects before and after the character.

The technical solutions provided in the respective embodiments of the present application are described in detail below with reference to the accompanying drawings.

FIG. 1 is a schematic structural diagram of a reconfigurable intelligence surface apparatus 10 according to an embodiment of the present application.

The reconfigurable intelligence surface apparatus 10 shown in FIG. 1 is arranged in a terminal 11. The reconfigurable intelligence surface apparatus 10 includes a plurality of individual reconfigurable intelligence surfaces 101. The plurality of individual reconfigurable intelligence surfaces 101 each include a folded state and an unfolded state (not shown in FIG. 1). In the folded state, the plurality of individual reconfigurable intelligence surfaces 101 are folded in the terminal 11, and the reconfigurable intelligence surface apparatus 10 may assist the terminal 11 in performing uplink communication. In the unfolded state, the plurality of individual reconfigurable intelligence surfaces 101 extend outwards from an interior of the terminal 11, and the reconfigurable intelligence surface apparatus 10 may assist the terminal 11 and/or a peripheral terminal of the terminal 11 in performing downlink communication.

The above terminal may be a fixed terminal or a mobile terminal with a communication function. For example, the terminal may be customer premise equipment (CPE), a vehicle-mounted terminal, a mobile phone, a tablet computer, smart home, etc. The reconfigurable intelligence surface apparatus is arranged in the terminal, which may mean that the reconfigurable intelligence surface apparatus is arranged in a shell of the terminal.

The peripheral terminal of the terminal may be another terminal in the periphery of the terminal, and may be, for example, a terminal with a device-to-device (D2D) communication function such as the Internet of Vehicles, an indoor terminal with a weak coverage signal, a low power Internet-of-Things terminal, or the like. There may be one or more peripheral terminals.

It needs to be noted that in the embodiment of the present application, a plurality of individual reconfigurable intelligence surfaces are arranged due to the facts that the area of a shell of the terminal (especially, the mobile terminal) is relatively small and arrangement of one individual reconfigurable intelligence surface in the shell of the terminal may cause limited quantity of configurable electromagnetic units and further insufficient signal power gain. Therefore, a plurality of individual reconfigurable intelligence surfaces are adopted in the embodiments of the present application, and the plurality of individual reconfigurable intelligence surfaces may be flexibly switched between the folded state and the unfolded state according to demands of the terminal, and the quantity of electromagnetic units is sufficient in the two states.

The specific quantity of the plurality of individual reconfigurable intelligence surfaces may be determined according to actual demands, which is not specifically limited here. Optionally, given that the plurality of individual reconfigurable intelligence surfaces each have the folded state and are folded in the terminal in the folded state, the quantity of the plurality of individual reconfigurable intelligence surfaces may be determined according to a size of the terminal. For example, if the terminal is a small-size smart phone, the quantity of the plurality of individual reconfigurable intelligence surfaces may be three to five, and if the terminal is large-size smart home system, the quantity of the plurality of individual reconfigurable intelligence surfaces may be five or more.

Optionally, the folded state of the plurality of individual reconfigurable intelligence surfaces may be a default state of the plurality of individual reconfigurable intelligence surfaces. The folded state of the plurality of individual reconfigurable intelligence surfaces may be a state in which the plurality of individual reconfigurable intelligence surfaces are stacked and folded in the terminal in a multi-layer mode. For example, if the quantity of individual reconfigurable intelligence surfaces is three, the three individual reconfigurable intelligence surfaces may be stacked and folded in the terminal in a three-layer mode, and each layer includes one individual reconfigurable intelligence surface. For another example, if the quantity of individual reconfigurable intelligence surfaces is six, the six individual reconfigurable intelligence surfaces may be stacked and folded in the terminal in a three-layer mode, and each layer includes two individual reconfigurable intelligence surfaces. Certainly, in other possible implementations, the plurality of individual reconfigurable intelligence surfaces may also be stacked and folded in another multi-layer mode, and other possible implementations are not illustrated one by one here.

It needs to be noted that when the plurality of individual reconfigurable intelligence surfaces are folded in the terminal in a multi-layer stacked state, a certain gap is needed between two adjacent layers of individual reconfigurable intelligence surfaces, the gap is usually related to the carrier wavelength, and in general, the smaller the carrier wavelength is, the smaller the gap may be.

For the multi-layer stacked state of the plurality of individual reconfigurable intelligence surfaces, the electromagnetic units between the plurality of layers of metasurfaces are stacked, so the phases are stacked, and amplitude adjustment may be on the basis of phase adjustment. Compared with a constant modulus constraint that only the phases may be adjusted for the common reconfigurable intelligence surfaces, the degree of freedom of amplitude modulation is increased, and an uplink power gain is effectively improved. It needs to be noted that an antenna array of the terminal is located at the inner side edge of a shell, in this case, the reconfigurable intelligence surfaces need to adopt a transmission type so that a signal of the terminal can be transmitted out; otherwise, if reconfigurable intelligence surfaces in a reflection type are adopted, the antenna array needs to be located opposite to the reflection surface of an electromagnetic unit array in the reconfigurable intelligence surfaces, which apparently cannot be implemented.

In addition, there is multi-layer cascading and penetration loss for the plurality of individual reconfigurable intelligence surfaces in the multi-layer stacked state, which is sensitive to interference. Therefore, a wave-absorbing material may be adopted in the shell of the terminal so as to shield external interference. Accordingly, the plurality of individual reconfigurable intelligence surfaces stacked in a multi-layer mode is in near-field work for the antenna array of the communication terminal, the noise is low, and multi-layer cascading and penetration loss are limited, which is beneficial for uplink enhancement. However, the plurality of individual reconfigurable intelligence surfaces are in a far field position relative to a base station, in the multi-layer stacked individual reconfigurable intelligence surfaces, a single-layer surface area has a limited gain relative to a far field signal, and ambient noise and multipath attenuation of the far field signal may be amplified via the multi-layer cascading and penetration, which is not beneficial for downlink enhancement. In addition, double-sided transmission properties of transmission-type reconfigurable intelligence surfaces are hardly consistent, sound uplink penetration and sound downlink penetration cannot be guaranteed at the same time, so the plurality of individual reconfigurable intelligence surfaces in a multi-layer stacked and folded state are generally suitable for the uplink enhancement but not suitable for the downlink enhancement.

The unfolded state of the plurality of individual reconfigurable intelligence surfaces may be a state in which the plurality of individual reconfigurable intelligence surfaces are unfolded in a single-layer mode. Optionally, the unfolded state may include at least one of a single-layer tiled state or a single-layer non-tiled state. The single-layer tiled state may be a state in which the plurality of individual reconfigurable intelligence surfaces are tiled in a single-layer spread mode. The single-layer non-tiled state may be a state in which the plurality of individual reconfigurable intelligence surfaces are in a single-layer spread state and an included angle between the two adjacent individual reconfigurable intelligence surfaces is not 180 degrees.

In the unfolded state, the plurality of individual reconfigurable intelligence surfaces extend outwards from the interior of the terminal, in this case, some metasurfaces of the plurality of individual reconfigurable intelligence surfaces may be located in the terminal, and the other metasurfaces may be located outside the terminal. An extending mode may be opening from an upper portion of the shell by breaking in the middle of the shell of the terminal, or extending from one side or two sides of the shell of the terminal, or other possible implementations. An implementation of making the plurality of individual reconfigurable intelligence surfaces extend outwards from the interior of the terminal is not specifically limited here. For making the plurality of individual reconfigurable intelligence surfaces extend outwards conveniently from the interior of the terminal, optionally, a notch may be formed in an extending position of the terminal, and the notch may be flexibly opened or closed. That is, in a case where the plurality of individual reconfigurable intelligence surfaces need to be unfolded, the notch may be opened, so that the plurality of individual reconfigurable intelligence surfaces may extend outwards from the interior of the terminal through the notch. In a case where the plurality of individual reconfigurable intelligence surfaces need to be folded, the plurality of individual reconfigurable intelligence surfaces may be folded in the terminal through the notch, and then the notch is closed. For example, in a case where the plurality of individual reconfigurable intelligence surfaces extend outwards from two sides of the shell of the terminal, notches may be formed in the two sides of the shell of the terminal, and the notches may be controlled by a controller in the terminal to open and close.

For the single-layer tiled state and the single-layer non-tiled state of the plurality of individual reconfigurable intelligence surfaces, the area of the single-layer reconfigurable intelligence surface is relatively large, there are sufficient electromagnetic units, and the power gain for receiving the far field signal is correspondingly high. In this case, the plurality of individual reconfigurable intelligence surfaces may be the same as a conventional reconfigurable intelligence surface used for relaying and may assist a base station in performing the downlink enhancement. An object of an enhancement service includes other communication terminals (namely, a peripheral terminal) nearby a communication terminal in addition to the communication terminal in which the reconfigurable intelligence surface apparatus is arranged, for example, a terminal group with a D2D communication function such as the Internet of Vehicles, an indoor terminal group with a weak coverage signal, a low power Internet-of-Things terminal group, and the like. In this case, the reconfigurable intelligence surface apparatus is not limited to assisting in the downlink communication, and may also be used for energy transfer, a sensing function and the like. In the unfolded state, the plurality of individual reconfigurable intelligence surfaces are transmission-type reconfigurable intelligence surfaces.

For conveniently understanding the folded state and the unfolded state of the plurality of individual reconfigurable intelligence surfaces, a description may be made below by taking three individual reconfigurable intelligence surfaces shown in FIG. 2 as an example. In FIG. 2A, the three individual reconfigurable intelligence surfaces 101 are folded in the shell of the terminal 11 in a three-layer stacked mode. In FIG. 2B, two of the three individual reconfigurable intelligence surfaces 101 extend outwards respectively from the two sides of the shell of the terminal 11, the other individual reconfigurable intelligence surface is still located in the terminal, and the three individual reconfigurable intelligence surfaces 101 are unfolded in a single-layer spread and tiled mode.

An application purpose of the reconfigurable intelligence surface apparatus provided by the embodiment of the present application is to realize uplink enhancement of the communication terminal in the folded state, so as to large power emission energy consumption of the communication terminal and reducing the overall energy consumption through relatively low power consumption of the reconfigurable intelligence surfaces, and realize downlink enhancement of the base station in the unfolded state, so as to meet the downlink transmission demand of the communication terminal itself and other peripheral communication terminals. In a word, the uplink enhancement serves a single user, namely, the communication terminal itself, and the downlink enhancement serves a user group including the communication terminal and the other peripheral communication terminals. Correspondingly, the reconfigurable intelligence surface apparatus may effectively reduce the emitting power consumption of the communication terminal itself in an uplink enhancement state, and in a case where the reconfigurable intelligence surface apparatus is in a downlink enhancement state, the communication terminal needs to increase its own emitting power appropriately to compensate an uplink capability.

The reconfigurable intelligence surface apparatus has a wide application scenario. On the one hand, the communication terminal has quite lower power than the base station, and there is an uplink coverage bottleneck, so there is a wide uplink enhancement demand. On the other hand, base station downlink has scenarios of line-of-sight obstruction, weak coverage, interference suppression in a neighboring cell, and the communication terminal also needs the reconfigurable intelligence surface apparatus to assist in the downlink enhancement. However, for the communication terminal, a usable surface of the shell is limited, the uplink enhancement and the downlink enhancement are difficult to perform at the same time through the reconfigurable intelligence surfaces, thus, the reconfigurable intelligence surface apparatus provided by the embodiment of the present application includes the folded state and the unfolded state, and the two states may be switched in a time-division mode to serve the uplink enhancement and the downlink enhancement. Correspondingly, the communication terminal can only reduce power consumption while the reconfigurable intelligence surface apparatus performs the uplink enhancement and cannot reduce the power consumption while the reconfigurable intelligence surface apparatus performs the downlink enhancement.

Besides, the communication terminal obtains different beamforming effects from the reconfigurable intelligence surface apparatus in a strong signal scenario such as a center of the cell and a cell edge or other weak signal scenarios. In some cases, in the center of the cell, the signal strength of the base station is high, a high-rank channel propagated as a rich scattering path may obtain a high multiple-input multiple-output (MIMO) multiplexing gain, and in this case, still acquiring a signal from a low-rank reconfigurable intelligence surface channel may cause remarkable reducing of the MIMO multiplexing gain of the communication terminal. The signal strength of the base station is low at the cell edge, or in a case of obstructing a base station signal or a severe interference of the neighboring cell, and assistance in the communication through the reconfigurable intelligence surface apparatus may obtain a very ideal array gain. In this case, of the terminal does not need the reconfigurable intelligence surface apparatus for enhancement in all downlink scenarios. Thus, the reconfigurable intelligence surface apparatus provided by the embodiment of the present application adopts time-division switching of the folded state and the unfolded state, which is also suitable for this demand state. That is, if the terminal is in a strong signal region, the reconfigurable intelligence surface apparatus is used for performing the uplink enhancement, and in this case, the reconfigurable intelligence surface apparatus of the terminal is in the folded state; and if the terminal is in a weak signal region, the reconfigurable intelligence surface apparatus is used for performing the downlink enhancement, and in this case, the reconfigurable intelligence surface apparatus of the terminal is in the unfolded state. In a scenario of a large change of an application environment of the terminal, the terminal is frequently switched to work between a strong signal and a weak signal, and in this case, the reconfigurable intelligence surface apparatus is more suitable for this application.

The reconfigurable intelligence surface in the embodiment of the present application is arranged in the terminal, may be, optionally, arranged in the shell of the terminal, and may be, arranged in space between a middle frame of the terminal and the shell of the terminal in some cases. The shell may include a wave-absorbing material. The shell may be used for shielding an external interference in a case where the plurality of individual reconfigurable intelligence surfaces are in the folded state. The plurality of individual reconfigurable intelligence surfaces may include a fixed metasurface and a movable metasurface. The fixed metasurface is fixed to a side wall between the middle frame and the shell, and the movable metasurface can move relative to the fixed metasurface. Optionally, the quantity of the fixed metasurfaces may be 1, and the quantity of the movable metasurfaces may be greater than or equal to 1. In the folded state, the movable metasurfaces may be stacked on an upper layer and/or a lower layer of the fixed metasurfaces. For example, if the quantity of the fixed metasurfaces is 1, and the quantity of the movable metasurfaces is also 1, the movable metasurface may be stacked on the upper layer or the lower layer of the fixed metasurface; and if the quantity of the fixed metasurfaces is 1, and the quantity of the movable metasurfaces is 2, the two movable metasurfaces may be both stacked on the upper layer or the lower layer of the fixed metasurface, or one movable metasurface is stacked on the upper layer of the fixed metasurface, and the other movable metasurface is stacked on the lower layer of the fixed metasurface. In the unfolded state, the movable metasurface may extend outwards from the interior of the space between the middle frame and the shell of the terminal to one side or two sides of the fixed metasurface (in a case where the movable metasurface is stacked on the upper layer or the lower layer of the fixed metasurface in the folded state, the movable metasurface extends to one side of the fixed metasurface; and in a case where the movable metasurface is stacked on the upper layer of the fixed metasurface and another movable metasurface is stacked on the lower layer of the fixed metasurface in the folded state, the movable metasurfaces extend to the two sides of the fixed metasurface), so as to be in the unfolded state with the fixed metasurface. Optionally, the movable metasurface extending to one side or the two sides of the fixed metasurface here may be extending to positions closely adjacent to the one side or the two sides of the fixed metasurface, to be in a tiled state coplanar with the fixed metasurface (namely, a single-layer tiled state) or in a state with a certain included angle (namely, a single-layer non-tiled state).

Optionally, a crawler belt may surround a side end of the fixed metasurface, and may be driven by a first motor to rotate around the fixed metasurface. During rotation, the crawler belt may drive the movable metasurface to move relative to the fixed metasurface. The first motor may be powered by a power management module of the terminal and controlled by a central processing unit of the terminal.

The above crawler belt driving the movable metasurface to move relative to the fixed metasurface may mean that when rotating around the fixed metasurface, the crawler belt drives the movable metasurface to be folded and stacked on the upper layer and/or the lower layer of the fixed metasurface, or drives the movable metasurface to extend outwards from the interior of the space between the middle frame and the shell of the terminal to one side or the two sides of the fixed metasurface.

Optionally, a control apparatus may further be arranged in the space between the middle frame and the shell of the terminal. The control apparatus may be configured to control the movable metasurface to move (for example, control the movable metasurface to be able to move stably) when the movable metasurface extends to one side or the two sides of the fixed metasurface, and/or control to adjust an included angle between the movable metasurface and the fixed metasurface after the movable metasurface extends to one side or the two sides of the fixed metasurface. The control apparatus may be powered by the power management module of the terminal and controlled by the central processing unit of the terminal.

The control apparatus may include one or more components. The one or more components may jointly implement functions of the control apparatus. Optionally, the control apparatus may include a horizontal support. The horizontal support may play a role in supporting the movable metasurface during a process of extending of the movable metasurface, so that the movable metasurface moves stably in the horizontal direction. In a case where the control apparatus includes the horizontal support, optionally, the control apparatus may further include an electromagnet and a spring. When the movable metasurface moves to the positions closely adjacent to the one side or the two sides of the fixed metasurface, the electromagnet may attract the movable metasurface to move up and down in the vertical direction, so that the movable metasurface and the fixed metasurface are on the same horizontal plane. The spring may be arranged between the electromagnet and the movable metasurface, and when the electromagnet attracts the movable metasurface to move up and down, the spring stretches and retracts along with up-down moving of the movable metasurface, so that the movable metasurface may move up and down stably. Optionally, there may be a plurality of electromagnets in the control apparatus, the plurality of electromagnets may generate different electromagnetic forces for the movable metasurface, and the different electromagnetic forces may control the movable metasurface and the fixed metasurface to form different included angles. Optionally, a permanent magnet may be arranged on the movable metasurface, so that the electromagnet may attract the movable metasurface through the permanent magnet to move in a vertical direction.

For convenient understanding, a reference may be made to FIG. 3 to FIG. 5. FIG. 3 to FIG. 5 make illustrations by taking the reconfigurable intelligence surface apparatus including three transmission-type individual reconfigurable intelligence surfaces as an example, wherein the three individual reconfigurable intelligence surfaces include one fixed metasurface and two movable metasurfaces, and in the folded state, the two movable metasurfaces are stacked on the upper layer and the lower layer of the fixed metasurface respectively.

FIG. 3 is a schematic structural diagram of the three individual reconfigurable intelligence surfaces in a default state (namely, the folded state). FIG. 3A is a front view. FIG. 3B is a left side view. FIG. 3C is a right side view. In FIG. 3A, the three individual reconfigurable intelligence surfaces are stacked and folded in the space between the middle frame 111 and the shell 112 (containing the wave-absorbing material) of the terminal in a three-layer mode, and the metasurface 31 in the middle is the fixed metasurface and is fixed to a side wall between the middle frame 111 and the shell 112 by means of a fixing shaft 32 (containing a signal line) (as shown in FIG. 3B and FIG. 3C). The crawler belt 33 surrounds the side end of the fixed metasurface 31, and an upper portion and a lower portion of the crawler belt 33 are each provided with one movable metasurface 34. The crawler belt 33 is driven by a first motor 35 and may be driven by the first motor 35 to rotate around the side end of the fixed metasurface 31. During rotation, the crawler belt 33 may drive the two movable metasurfaces 34 to move relative to the fixed metasurface 31, the movable metasurface 34 located on the upper layer of the fixed metasurface 31 moves leftwards, and the movable metasurface 34 located on the lower layer of the fixed metasurface 31 moves rightwards. The two movable metasurfaces 34, when moving to a side wall outlet 113 between the middle frame 111 and the shell 112, are supported by the horizontal supports 38 at top ends of springs 37 which are hooked with the electromagnets 36 fixed to the side wall between the middle frame 111 and the shell 112 (the springs 37, the electromagnets 36 and the horizontal supports 38 are the control apparatus recorded above), so as to guarantee a stable moving process of the movable metasurfaces 34 and 35. Power supply and control for the first motor 35 and the electromagnets 36 shown in FIG. 3 may be completed by the power management module and the central processing unit of the terminal.

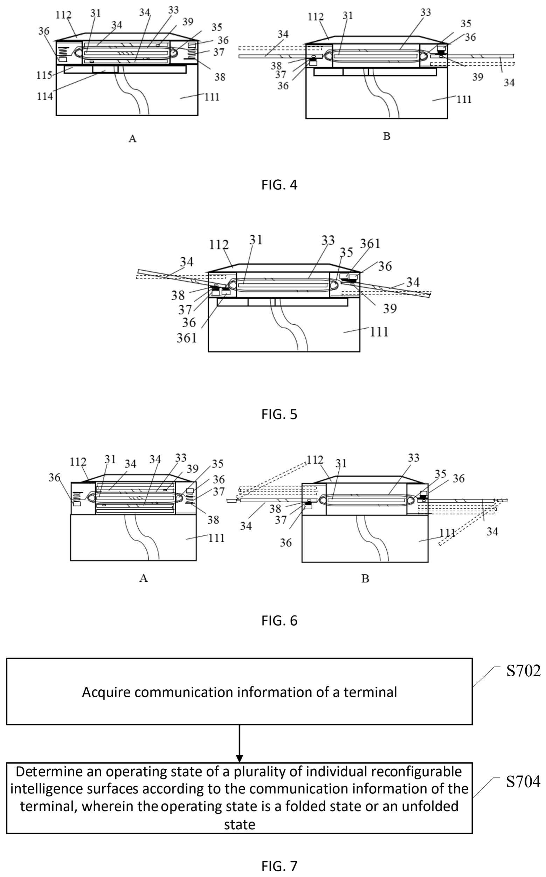

FIG. 4 is a schematic diagram of the reconfigurable intelligence surface apparatus shown in FIG. 3 switched from the folded state to the unfolded state. In FIG. 4A, the three individual reconfigurable intelligence surfaces are stacked and folded in the space between the middle frame 111 and the shell 112 of the terminal in a three-layer mode, the first motor 35 is powered and drives the crawler belt 33 to rotate around the fixed metasurface 31, and then the crawler belt 33 drives the movable metasurfaces 34 located on the upper layer and the lower layer of the fixed metasurface 31 to extend outwards from the interior of the terminal. When the first motor 35 drives the crawler belt 33 to rotate for a whole circle (the upper reconfiguration surface and the lower metasurface each occupy a half circle), the crawler belt 33 may drive the two movable metasurfaces 34 to rotate out to the side wall outlet. When the crawler belt 33 moves to drive the two movable metasurfaces 34 so that most of metasurfaces move out of the side wall outlet, a system processor on a terminal main board may control the electromagnets 36 to be powered on and generate a magnetic force, so as to attract the permanent magnets 39 at tail ends of the movable metasurfaces 34 and drive the springs 37 to be compressed, and thus the movable metasurfaces 34 and the fixed metasurface 31 form the single-layer tiled state (as shown in FIG. 4B). When the single-layer tiled state needs to be switched to a multi-layer stacked state, the central processing unit of the terminal may control the electromagnets 36 to be powered off and lose the magnetic force, so as to release an attracting force for the permanent magnets 39, the springs 37 bounce off, at the same time, the first motor 35 is driven to rotate reversely so as to drive the crawler belt 33 to rotate reversely around the fixed metasurface 31, and during reverse rotation, the crawler belt 33 drives the two movable metasurfaces 34 to be folded in the space between the middle frame 111 and the shell 112 and restore an original position shown in FIG. 4A.

The plurality of individual reconfigurable intelligence surfaces serve for uplink enhancement in the multi-layer stacked state, so the shell needs to have the wave-absorbing material for shielding an external interference, and effective reducing of an uplink cascading interference is guaranteed. Meanwhile, when the plurality of individual reconfigurable intelligence surfaces are switched from the multi-layer stacked and folded state to a single-layer spread and tiled state, though the movable metasurfaces are not protected by the wave-absorbing material of the shell, the plurality of individual reconfigurable intelligence surfaces serve for downlink enhancement due to there is only a single layer and there is no extra cascading penetration attenuation factor. It may be further seen from FIG. 3 and FIG. 4 that an antenna of the communication terminal is in an inner side position of the metasurface facing the middle frame, and in this case, an uplink signal needs to penetrate through the metasurface, so the transmission-type metasurface is adopted.

Based on the unfolded state shown in FIG. 4, angle adjustment and control in the non-tiled state may further be performed on the fixed metasurface 31 and the movable metasurface 34, so as to adapt to a more flexible scenario application. As shown in FIG. 5, backup electromagnets 361 may be added on a left side and a right side respectively, after adding the backup electromagnets 361, for the movable metasurface 34 on the left side, the electromagnets 36 and the backup electromagnets 361 may be controlled to generate different magnetic forces, and thus an inclination angle of the movable metasurface 34 is adjusted. Likewise, for the movable metasurface 34 on the right side, the electromagnets 36 and the backup electromagnets 361 may also be controlled to generate different magnetic forces, thus an inclination angle of the movable metasurface 34 is adjusted, and the movable metasurface 34 on the left side, the fixed metasurface 31 and the movable metasurface 34 on the right side form the single-layer non-tiled state.

It needs to be noted that in the reconfigurable intelligence surface apparatus shown in FIG. 3 to FIG. 5, in the folded state of the reconfigurable intelligence surfaces, the quantity of movable metasurfaces stacked on the upper layer of the fixed metasurface and the quantity of movable metasurfaces stacked on the lower layer of the fixed metasurface are both 1. Optionally, in other possible implementations, there may also be a plurality of movable metasurfaces stacked on the upper layer or the lower layer of the fixed metasurface, and the plurality of movable metasurfaces may be stacked on the upper layer or the lower layer of the fixed metasurface in a stacked and folded mode.

Taking the plurality of movable metasurfaces stacked on the upper layer of the fixed metasurface as an example, the plurality of movable metasurfaces may be connected through a torsional spring hinge, a second motor is arranged at the torsional spring hinge, and the second motor may be powered by the power management module of the terminal and controlled by the central processing unit of the terminal. When the fixed metasurface and the movable metasurfaces are switched from the folded state to the unfolded state, the crawler belt surrounding the side end of the fixed metasurface may drive the plurality of movable metasurfaces on the upper layer of the fixed metasurface to extend to one side of the fixed metasurface, and then the second motor may drive the torsional spring hinge to unfold the plurality of movable metasurfaces, so that the plurality of movable metasurfaces and the fixed metasurface form the single-layer tiled state. Optionally, after the plurality of movable metasurfaces are unfolded, the second motor may also drive the torsional spring hinge to adjust the included angle between the plurality of movable metasurfaces, so that the plurality of movable metasurfaces and the fixed metasurface may form the single-layer non-tiled state. When the fixed metasurface and the movable metasurfaces are switched from the unfolded state to the folded state, the second motor may drive the torsional spring hinge to stack and fold the plurality of movable metasurfaces (in this case, the plurality of movable metasurfaces are located outside the terminal and located on one side of the fixed metasurface), then the crawler belt surrounding the side end of the fixed metasurface may drive the plurality of movable metasurfaces to move into the space between the middle frame and the shell of the terminal and be stacked on the upper layer of the fixed metasurface.

Likewise, in a case where the plurality of movable metasurfaces are stacked on the lower layer of the fixed metasurface, the plurality of movable metasurfaces may also be connected through the torsional spring hinge, the second motor may also be arranged at the torsional spring hinge, and at the same time, folding and unfolding of the plurality of movable metasurfaces may also be implemented through contents recorded above, which is not described in detail here.

For convenient understanding, a reference may be made to FIG. 6. The reconfigurable intelligence surface apparatus shown in FIG. 6 includes five individual reconfigurable intelligence surfaces. In the folded state, the five individual reconfigurable intelligence surfaces are stacked and folded in the space between the middle frame 111 and the shell 112 of the terminal in a five-layer mode. The five individual reconfigurable intelligence surfaces include one fixed metasurface and four movable metasurfaces. Two of the four movable metasurfaces 34 are arranged on the upper layer of the fixed metasurface 31 in a stacked and folded state, and the other two movable metasurfaces 34 are arranged on the lower layer of the fixed metasurface 31 in a stacked and folded state. The two movable metasurfaces 34 located on the upper layer of the fixed metasurface 31 may be connected through a torsional spring hinge. Likewise, the other two movable metasurfaces 34 located on the lower layer of the fixed metasurface 31 may also be connected through a torsional spring hinge. When the folded state is switched to the unfolded state, the crawler belt 33 surrounding the side end of the fixed metasurface 31 may drive the movable metasurfaces 34 on the upper layer and the lower layer to extend outwards to two sides of the fixed metasurface 31, so as to form the tiled and unfolded state with the fixed metasurface 31, then the second motor (not shown in FIG. 6) arranged at the torsional spring hinge drives the torsional spring hinge to unfold the two folded and stacked movable metasurfaces 34, and after unfolding, the movable metasurfaces 34 on a left side and a right side and the fixed metasurface 31 may form the single-layer tiled state. Regarding switching from the unfolded state to the folded state, a specific implementation process is an inverse process of switching from the folded state to the unfolded state, which is not described in detail here.

Optionally, in a case where the five reconfigurable intelligence surfaces shown in FIG. 6 are in the single-layer tiled state, the torsional spring hinge may also be driven by the second motor to adjust the included angle between the movable metasurfaces, so that the movable metasurfaces and the fixed metasurface may form the single-layer non-tiled state. Further, the backup electromagnets (shown in FIG. 5) may also be added respectively at positions of the electromagnets 36 shown in FIG. 6, so that the included angle between the fixed metasurface and the movable metasurfaces is adjusted.

It needs to be noted that given that in the folded state, the plurality of individual reconfigurable intelligence surfaces are stacked and folded in the terminal in a multi-layer mode, the quantity of the movable metasurfaces is better not too large, because too many layers increase the thickness of the terminal and affect convenience in use of the terminal, meanwhile, signal superposition among the plurality of layers of metasurfaces causes attenuation and interference in an aspect of a large cascade effect due to inconsistency of components among the layers, difficulty of beam adjustment and control is correspondingly increased, and thus the quantity of stacked layers is better not too large and may be, optionally, within a range of single digits.

To sum up, the reconfigurable intelligence surface apparatus provided by the embodiment of the present application is arranged in the terminal. The apparatus includes the plurality of individual reconfigurable intelligence surfaces. The plurality of individual reconfigurable intelligence surfaces have the folded state and the unfolded state. In the folded state, the plurality of individual reconfigurable intelligence surfaces are folded in the terminal. In the unfolded state, the plurality of individual reconfigurable intelligence surfaces extend outwards from the interior of the terminal. When the terminal has a communication demand, the plurality of individual reconfigurable intelligence surfaces can be folded or unfolded to assist the terminal in performing the uplink communication or the downlink communication, and thus a communication environment and state of the terminal are improved and the communication demand of the terminal is met. Besides, the plurality of individual reconfigurable intelligence surfaces in the folded state may assist the terminal in performing the uplink communication, so the radio frequency chain transmitting power of the terminal may be reduced effectively, and power consumption of the terminal is reduced. The plurality of individual reconfigurable intelligence surfaces in the unfolded state may assist the terminal in performing the downlink enhancement, so a downlink transmission demand of the terminal for itself and other peripheral communication terminals may be met, and thus the flexible application in complex and ever-changing wireless communication scenarios is implemented.

Based on the reconfigurable intelligence surface apparatus provided by the embodiment of the present application, an embodiment of the present application further provides a terminal communication method. The method is applied to a terminal. The reconfigurable intelligence surface apparatus provided by the embodiment of the present application is arranged in the terminal. A reference may be made to an embodiment shown in FIG. 7 for details.

FIG. 7 is a schematic flowchart of a terminal communication method according to an embodiment of the present application. The embodiment shown in FIG. 7 includes the following steps.

At S702: communication information of the terminal is acquired.

The terminal, when performing communication, may acquire its own communication information. The communication information may be information related to terminal communication. Optionally, the communication information may include at least one of a received signal quality parameter of the terminal, whether the terminal receives a downlink enhancement request, whether the terminal receives first information, or a radio frequency chain transmitting power of the terminal.

The received signal quality parameter of the terminal may include, but is not limited to, at least one of the following: the reference signal receiving power (RSRP); a received signal strength indicator (RSSI); reference signal receiving quality (RSRQ); the signal to interference plus noise ratio (SINR); or the carrier to interference plus noise ratio (CINR).

The downlink enhancement request may be a downlink enhancement request from a base station and/or a peripheral terminal (other terminals in the periphery of the terminal). By means of the downlink enhancement request, the base station and/or the peripheral terminal requests the terminal to perform downlink enhancement through the reconfigurable intelligence surface apparatus. The downlink enhancement request received by the terminal from the base station may have two cases. In a first case, the downlink enhancement request is proposed to the terminal when the base station evaluates that the peripheral terminal has a downlink enhancement demand according to information including a communication quality parameter reported by the peripheral terminal. In a second case, the downlink enhancement request is dynamically proposed by the base station to the terminal according to a cell communication environment. In the first case, the base station transmits the downlink enhancement demand of the peripheral terminal to the terminal, and in this case, the peripheral terminal usually has no D2D function and cannot directly send request information to the terminal like a peripheral terminal having the D2D function.

A demand of the downlink enhancement request is not limited to improving the communication and may also be enhancement sensing and energy transfer. In general, the base station may determine whether to send the downlink enhancement request according to a signal condition around the terminal. For example, when the terminal is located at a cell edge or faces a strong interference of a neighboring cell, the base station may propose a downlink enhancement directional request or associated broadcast information. The downlink enhancement request may be proposed according to a device to device (D2D) communication or an applet when the peripheral terminal has a communication demand. Some of these downlink enhancement requests are based on understanding of a requester (namely, the base station and the peripheral terminal) for the terminal having the reconfigurable intelligence surface apparatus, and some of them are blind passage.

First information may be used for indicating that no downlink enhancement demand exists. The first information may be from the base station and/or the peripheral terminal. Taking the first information from the base station as an example, when the base station does not need the terminal to perform downlink enhancement through the reconfigurable intelligence surface apparatus, the base station may send the first information to the terminal so as to notify or indicate the terminal that the base station has no downlink enhancement demand, and accordingly, the terminal does not need to perform the downlink enhancement through the reconfigurable intelligence surface apparatus. For example, when the terminal is located at a center of the cell, the base station may send the first information to the terminal. A mode in which the base station and the peripheral terminal send the first information may be the same as the above mode of sending the downlink enhancement request, which is not repeated here.

It needs to be noted that for the base station and the peripheral terminal, the above downlink enhancement request and the above first information are not sent to the terminal at the same time. That is, at the same moment, the base station and the peripheral terminal may send the downlink enhancement request to the terminal (in a case where the base station and/or the peripheral terminal have/has the downlink enhancement demand), or send the first information to the terminal (in a case where the base station and/or the peripheral terminal have/has no downlink enhancement demand), or neither send the downlink enhancement request nor send the first information (in a case where after the base station and/or the peripheral terminal send/sends the downlink enhancement request to the terminal, a state of needing to perform the downlink enhancement remains unchanged, or in a case where after the first information is sent to the terminal, a state of needing not to perform the downlink enhancement remains unchanged).

At S704: an operating state of the plurality of individual reconfigurable intelligence surfaces is determined according to the communication information of the terminal, where the operating state is the folded state or the unfolded state.

The terminal, after acquiring its own communication information, may determine whether to perform uplink enhancement or the downlink enhancement according to the communication information, and then determine the operating state of the plurality of individual reconfigurable intelligence surfaces in the reconfigurable intelligence surface apparatus. The operating state includes the folded state or the unfolded state. For example, if the terminal determines that the uplink enhancement needs to be performed, it may be determined that the operating state of the plurality of individual reconfigurable intelligence surfaces is the folded state, and if the terminal determines that the downlink enhancement needs to be performed, it may be determined that the operating state of the plurality of individual reconfigurable intelligence surfaces is the unfolded state.

Optionally, in a case where the communication information of the terminal includes at least one of the received signal quality parameter of the terminal, whether the terminal receives the downlink enhancement request, whether the terminal receives the first information or the radio frequency chain emitting power of the terminal, determining, by the terminal, the operating state of the plurality of individual reconfigurable intelligence surfaces according to the communication information may include that: in a case where the communication information of the terminal meets a first condition, the operating state of the plurality of individual reconfigurable intelligence surfaces is determined to be the unfolded state; or in a case where the communication information of the terminal meets a second condition, the operating state of the plurality of individual reconfigurable intelligence surfaces is determined to be the folded state.

The communication information of the terminal meeting the first condition may include at least one of the following (1) and (2).

(1) The received signal quality parameter of the terminal is less than a preset threshold.
The preset threshold may be set according to an actual communication demand, which is not specifically limited here.

The received signal quality parameter of the terminal being less than the preset threshold may mean that the received signal quality parameter of the terminal is continuously less than the preset threshold within a certain period of time (may also be set according to an actual communication demand). In a case where the received signal quality parameter is continuously less than the preset threshold, it may be determined that the terminal is currently located in a weak signal region, the terminal needs to perform the downlink enhancement, and at the moment, it may be determined that the operating state of the plurality of individual reconfigurable intelligence surfaces in the reconfigurable intelligence surface apparatus is the unfolded state, that is, the plurality of individual reconfigurable intelligence surfaces need to be unfolded.

(2) The terminal receives the downlink enhancement request.

If the terminal receives the downlink enhancement request, it may be determined that the base station and/or the peripheral terminal has the downlink enhancement demand. For meeting the communication demand, the terminal may determine that the operating state of the plurality of individual reconfigurable intelligence surfaces in the reconfigurable intelligence surface apparatus is the unfolded state, that is, the plurality of individual reconfigurable intelligence surfaces need to be unfolded. It needs to be noted that for the downlink enhancement demand, the terminal needs to confirm authenticity of the request by repeated handshake and communication with a requester (the base station and/or the peripheral terminal) and then start the downlink enhancement.

It needs to be noted that in a case where the communication information of the terminal meets at least one of the above (1) and (2), it may be determined that the operating state of the plurality of individual reconfigurable intelligence surfaces is the unfolded state.

The communication information of the terminal meeting the second condition may include at least one of the following (3) to (5).

(3) The received signal quality parameter of the terminal is greater than or equal to the preset threshold.

The preset threshold may be the preset threshold in the above item (1). The received signal quality parameter of the terminal being greater than or equal to the preset threshold may mean that the received signal quality parameter of the terminal is continuously greater than or equal to the preset threshold within a certain period of time (may be set according to an actual communication demand). In a case where the received signal quality parameter is continuously greater than or equal to the preset threshold, it may be determined that the terminal is currently located in a strong signal region, the terminal may perform the uplink enhancement so as to reduce its own radio frequency chain power consumption, and at the moment, it may be determined that the operating state of the plurality of individual reconfigurable intelligence surfaces in the reconfigurable intelligence surface apparatus is the folded state, that is, the plurality of individual reconfigurable intelligence surfaces need to be folded.

(4) The radio frequency chain emitting power of the terminal is greater than or equal to a preset emitting power.

The preset emitting power may be set according to an energy consumption situation of the terminal, which is not specifically limited here. The radio frequency chain emitting power of the terminal being greater than or equal to the preset emitting power may mean that the radio frequency chain emitting power of the terminal is greater than or equal to the preset emitting power within a certain period of time, at the moment, it may be considered that the radio frequency chain emitting power of the terminal is relatively large, and the radio frequency chain power consumption of the terminal is high. For reducing the radio frequency chain power consumption of the terminal, it may be determined that the operating state of the plurality of individual reconfigurable intelligence surfaces in the reconfigurable intelligence surface apparatus is the folded state, that is, the plurality of individual reconfigurable intelligence surfaces need to be folded. In the folded state, the reconfigurable intelligence surface apparatus may be used for assisting the terminal in performing the uplink enhancement, and in a case where the uplink enhancement is performed, the terminal may reduce its own radio frequency chain emitting power, so as to reduce the radio frequency chain power consumption of the terminal.

Optionally, if the terminal is a mobile terminal, the terminal may be quite sensitive to its own power consumption of continuously supporting the downlink enhancement. If the power consumption exceeds a limiting value, the downlink enhancement of the terminal is difficult to continue, and by that time, there is a problem of uplink switching, what is worse, a problem of recharging alarm occurs.

(5) The terminal receives the first information used for indicating that no downlink enhancement demand exists.

The terminal receiving the first information may correspond to two scenarios. In one scenario, a downlink enhancement service of the requester (the base station and/or the peripheral terminal) is satisfied. In the other scenario, the downlink enhancement has no effect, in this case, the requester may send the first information to the terminal, the terminal, in a case of receiving the first information, may determine that the operating state of the plurality of individual reconfigurable intelligence surfaces in the reconfigurable intelligence surface apparatus is the folded state, that is, the plurality of individual reconfigurable intelligence surfaces may be folded. In the folded state, the plurality of individual reconfigurable intelligence surfaces may be used for the uplink enhancement.

Optionally, in a possible implementation, in a case of having the downlink enhancement demand, the requester may send the downlink enhancement request to the terminal at intervals (may be determined according to an actual demand). In this way, the requester, in a case of having no downlink enhancement demand, may not send or may cancel sending the downlink enhancement request and does not need to send the first information. For the terminal, the terminal, if receiving no downlink enhancement request in a set time (greater than a time interval of sending the downlink enhancement request by the requester), may determine that the requester has no downlink enhancement demand, and at the moment, it may be determined that the operating state of the plurality of individual reconfigurable intelligence surfaces in the reconfigurable intelligence surface apparatus is the folded state.

It needs to be noted that in a case where the communication information of the terminal meets at least one of the above (3) to (5), it may be determined that the operating state of the plurality of individual reconfigurable intelligence surfaces is the folded state.

Optionally, for a fixed terminal, the fixed terminal is insensitive to a problem in power consumption, so when the operating state of the plurality of individual reconfigurable intelligence surfaces is to be determined, self radio frequency chain emitting power may be not considered, but at least one of whether the downlink enhancement request is received, whether the first information is received, or whether the received signal quality parameter is greater than or equal to the preset threshold may be considered. When the operating state of the plurality of individual reconfigurable intelligence surfaces is determined jointly based on at least one of the downlink enhancement request or the first information, and the received signal quality parameter, for meeting the communication demand of the terminal, a priority of the received signal quality parameter may further be set to be greater than a priority of the downlink enhancement request and the first information. That is, in a case where the received signal quality parameter of the terminal is less than the preset threshold, no matter whether the downlink enhancement request or the first information is received, the operating state of the plurality of individual reconfigurable intelligence surfaces may be determined to be the unfolded state so as to perform the downlink enhancement. In a case where the received signal quality parameter of the terminal is greater than or equal to the preset threshold, if the terminal receives the first information, the operating state of the plurality of individual reconfigurable intelligence surfaces may be determined to be the folded state, or if the terminal receives the downlink enhancement request, the operating state of the plurality of individual reconfigurable intelligence surfaces may be determined to be the unfolded state so as to perform the downlink enhancement.

For the mobile terminal, the mobile terminal is sensitive to the problem in power consumption, so when the operating state of the plurality of individual reconfigurable intelligence surfaces is to be determined, the self radio frequency chain emitting power may be considered first. That is, in a case where the self radio frequency chain emitting power of the terminal is greater than or equal to the preset emitting power, no matter whether the downlink enhancement request is received, whether the first information is received and whether the received signal quality parameter is greater than or equal to the preset threshold, the operating state of the plurality of individual reconfigurable intelligence surfaces may be determined to be the folded state so as to perform the uplink enhancement, and thus the self radio frequency chain emitting power and the radio frequency chain power consumption are reduced. If the self radio frequency chain emitting power of the terminal is less than the preset emitting power, the operating state of the plurality of individual reconfigurable intelligence surfaces may be determined based on at least one of whether the downlink enhancement request is received, whether the first information is received, or whether the received signal quality parameter is greater than or equal to the preset threshold. If the operating state of the plurality of individual reconfigurable intelligence surfaces is determined jointly based on at least one of the downlink enhancement request or the first information and the received signal quality parameter, it may be the same as that of the fixed terminal, that is, the priority of the received signal quality parameter is set to be greater than the priority of the downlink enhancement request and the first information, and a reference may be made to the above corresponding description of the fixed terminal for details, which is not repeated here.

It needs to be further noted that the when the terminal switches the reconfigurable intelligence surface apparatus from the folded state to the unfolded state, namely, when uplink enhancement is switched to downlink enhancement, a completing situation for an uplink task by the terminal may also be considered, and it is switched to the downlink enhancement in a case where the uplink task is completed, so as to avoid affecting uplink communication of the terminal.

Optionally, the terminal may further perform at least one of the following operations (6) to (9) in a case of determining the operating state of the plurality of individual reconfigurable intelligence surfaces.

(6) In a case where the operating state is the folded state, the radio frequency chain emitting power of the terminal is reduced.

In the folded state, the plurality of individual reconfigurable intelligence surfaces are used for the uplink enhancement and may compensate for part of uplink emitting power, so the terminal may reduce its own radio frequency chain emitting power appropriately so as to reduce the radio frequency chain power consumption. For the mobile terminal, after reducing the its own radio frequency chain emitting power, a use duration a battery of the terminal may be prolonged.

(7) In a case where the operating state is the unfolded state, the radio frequency chain emitting power of the terminal is maintained or increased according to a communication state of the terminal.

In the unfolded state, the plurality of individual reconfigurable intelligence surfaces are used for downlink enhancement, and uplink enhancement cannot be performed, so for guaranteeing the stability of the uplink communication, the terminal may maintain or increase the its own radio frequency chain emitting power according to an actual communication state.

(8) In a case where the operating state is the folded state, the plurality of individual reconfigurable intelligence surfaces are controlled to be folded.

For example, if the plurality of individual reconfigurable intelligence surfaces are in the unfolded state previously, the terminal may drive components such as a motor in the reconfigurable intelligence surface apparatus through a central processing unit, so as to control the plurality of individual reconfigurable intelligence surfaces to be stacked and folded. In a case where the plurality of individual reconfigurable intelligence surfaces include a fixed metasurface and a movable metasurface, the process of controlling the plurality of individual reconfigurable intelligence surfaces to be folded further involves operations such as moving the movable metasurface into the shell of the terminal from the outside of the shell of the terminal, stacking the movable metasurface on the upper layer and/or the lower layer of the fixed metasurface, and closing the shell used for wrapping the plurality of individual reconfigurable intelligence surfaces.

(9) In a case where the operating state is the unfolded state, the plurality of individual reconfigurable intelligence surfaces are controlled to be unfolded.

For example, if the plurality of individual reconfigurable intelligence surfaces are in the folded state previously, the terminal may drive components such as a motor in the reconfigurable intelligence surface apparatus through a central processing unit, so as to control the plurality of individual reconfigurable intelligence surfaces to be unfolded. In a case where the plurality of individual reconfigurable intelligence surfaces include the fixed metasurface and the movable metasurface, the process of controlling the plurality of individual reconfigurable intelligence surfaces to be folded and unfolded further involves operations such as opening the shell of the terminal used for wrapping the plurality of individual reconfigurable intelligence surfaces, moving the movable metasurface (except the fixed metasurface) out of the shell, and controlling the movable metasurface and the fixed metasurface to be single-layer tiled or non-tiled.

Optionally, in a case of determining the operating state of the plurality of individual reconfigurable intelligence surfaces, the terminal may further perform the following operations: channel state information, and the operating state of the plurality of individual reconfigurable intelligence surfaces are sent to the base station; configuration data is received from the base station, wherein the configuration data is obtained after the base station performs a channel estimation and beamforming according to the channel state information and the operating state of the plurality of individual reconfigurable intelligence surfaces; and parameter configuration is performed on the plurality of individual reconfigurable intelligence surfaces according to the configuration data.

In some cases, the terminal, after determining the operating state of the plurality of individual reconfigurable intelligence surfaces, may send the operating state to the base station, that is, the base station may be informed of a decision of the uplink or downlink enhancement after uplink or downlink enhancement is determined. In addition, the terminal may further send the channel state information to the base station, so that the base station performs channel estimation and beamforming.

For example, if the terminal determines to perform the downlink enhancement by using the reconfigurable intelligence surface apparatus, the terminal may send decision information (including the operating state of the plurality of individual reconfigurable intelligence surfaces) of performing the downlink enhancement through the reconfigurable intelligence surface apparatus and current channel state information (CSI) to the base station. The CSI may be measured by the terminal according to downlink channel state information-reference signal (CSI-RS) of the base station. The CSI may include a rank indication (RI), a precoding matrix indicator (PMI), a channel quality indicator (CQI) and the like. Sending, by the terminal, the decision information of performing the downlink enhancement and the CSI to the base station is quite important, because in a case where the reconfigurable intelligence surface apparatus is switched from the uplink enhancement to the downlink enhancement, states of the plurality of individual reconfigurable intelligence surfaces are changed from multi-layer stacking to single-layer tiling, but a far field physical position relative to the base station before and after switching is not changed within short time, after the terminal sends the decision information of performing the downlink enhancement and the CSI to the base station, the base station may omit a repositioning process for the reconfigurable intelligence surface apparatus and can directly send, to the state-changed reconfigurable intelligence surface apparatus, a beam emitting signal determined by the set multi-level CSI, and thus beam forming may be rapidly performed on the state-switched reconfigurable intelligence surface apparatus.

Likewise, if the terminal determines to perform the uplink enhancement by using the reconfigurable intelligence surface apparatus, the terminal may also send the decision information of performing the uplink enhancement through the reconfigurable intelligence surface apparatus and the CSI to the base station, which is not described in detail here.

For the base station, after receiving the decision information of performing the uplink or downlink and the CSI sent by the terminal, the base station may perform the channel estimation and the beamforming according to such information, so as to obtain the configuration data for the plurality of individual reconfigurable intelligence surfaces in the reconfigurable intelligence surface apparatus.

Different from single user in uplink, downlink involves a random channel and multiple users. Different from a conventional reconfigurable intelligence surface in a relay form, the reconfigurable intelligence surface apparatus in the embodiment of the present application, which is relative to the base station, is low-dimensional slow-change in the uplink and high-dimensional slow-change in the downlink, but after multiple users (namely, a plurality of peripheral terminals) access in the downlink enhancement, low-dimensional fast-change is presented between the reconfigurable intelligence surface apparatus and the terminal. Multiple users and multiple beams are introduced in the downlink enhancement, thus two time-scale exist, that is, a large time scale exists between the base station and the reconfigurable intelligence surface apparatus, and a small time scale exists between the reconfigurable intelligence surface apparatus and the peripheral terminal.

The base station needs to perform the channel estimation before performing the beam forming on the reconfigurable intelligence surface apparatus used for the uplink enhancement or the downlink enhancement. Generally, the reconfigurable intelligence surfaces lack a signal processing capability, and the problem of channel transmission cascading non-convexity and a coupling variable of the terminal-reconfigurable intelligence surface and the reconfigurable intelligence surface-base station increase the cost and difficulty of the channel estimation. The terminal, as an ultra-close active communication carrier of the reconfigurable intelligence surface apparatus, may perform necessary communication handshake with the base station so as to reduce the difficulty of passive beamforming for the reconfigurable intelligence surfaces by the base station.

Relative to the base station, the reconfigurable intelligence surface apparatus is low-dimensional slow-change in the uplink and high-dimensional slow-change in the downlink, the base station uses a beam configured based on CSI feedback information during switching of the terminal from uplink to downlink as instantaneous CSI of a known channel state, and according to a known channel, an emitting signal is adjusted and a receiving signal is optimized, which is essentially equivalent to performing transfer adaption before an existing uplink channel is outdated.

After switching to the downlink enhancement, the reconfigurable intelligence surface apparatus is changed from a multi-layer stacked state to a single-layer tiled or single-layer non-tiled state, the channel is changed, a channel model may have the two time-scale based on an SV model (proposed by Salen and Valenzula in 1972) of a uniform planar array (UPA) or a 3GPP TS 36.879 model, high-dimensional slow-change large-time-scale CSI between the reconfigurable intelligence surface apparatus and the base station needs to be recalculated according to the quantity of electromagnetic units changed for the base station in the single-layer tiled or single-layer non-tiled state using a compressed sensing method, small-time-scale CSI needs to be obtained through statistical methods including artificial intelligent (AI) and/or machine learning (ML) by performing beam training on a low-dimensional fast-change fading distribution, a spatial correlation and the like of the reconfigurable intelligence surface apparatus and the peripheral terminal. The base station, after performing the channel estimation, may perform joint transmit-receive beamforming on the reconfigurable intelligence surface apparatus based on a channel estimation result.

In a case where the reconfigurable intelligence surface apparatus is switched from the downlink enhancement to the uplink enhancement, multiple users are changed to a single user, a single-layer large-area reconfigurable intelligence surface is changed to multi-layer small-area reconfigurable intelligence surfaces, and the instantaneous CSI is still used in a switching stage. After switching is completed, the base station may reperform the channel estimation based on the SV channel model of the uniform linear array (ULA) and according to the CSI fed back by the terminal. For the fixed terminal, channels of the terminal-reconfigurable intelligence surface and the reconfigurable intelligence surface-base station are quasi-static low-dimensional channels without frequent estimations. For the mobile terminal, the terminal-reconfigurable intelligence surface is a static low-dimensional channel without the frequent estimations, but the channel between the reconfigurable intelligence surface and the base station is a dynamic high-dimensional channel with the need of the frequent estimations. They generally belong to slow change and may adopt instantaneous CSI. The multi-level CSI obtained by the base station based on the channel estimation from the terminal may perform the joint transmit-receive beamforming on the reconfigurable intelligence surface apparatus.

Optionally, part of electromagnetic units in the reconfigurable intelligence surface may be designed as active, in this way, the base station can add an active beam forming factor to the reconfigurable intelligence surface apparatus, multiplicative fading of a cascaded channel can also be overcome, and the beam forming is more accurate.

The base station, after performing the beam forming, may obtain the configuration data for the plurality of individual reconfigurable intelligence surfaces. The configuration data includes a carrier frequency, a phase, an amplitude and the like. In a case where the operating state of the plurality of individual reconfigurable intelligence surfaces is the unfolded state, the configuration data may be determined according to a signal to interference plus noise ratio of a signal received by the terminal. The signal to interference plus noise ratio may be determined according to a downlink signal, a downlink interference signal and a downlink noise signal received by the terminal. The downlink signal received by the terminal may be determined according to a downlink communication parameter of the terminal. The downlink communication parameter of the terminal may include a receiving combined vector of the terminal, a downlink beamforming vector of the base station, a downlink channel coefficient between the terminal and the base station, a downlink channel coefficient between the terminal and the plurality of individual reconfigurable intelligence surfaces, a downlink channel coefficient between the base station and the plurality of individual reconfigurable intelligence surfaces, a downlink phase shift and amplitude shift coefficient of the plurality of individual reconfigurable intelligence surfaces, and a downlink penetration loss coefficient of the plurality of individual reconfigurable intelligence surfaces. The downlink interference signal received by the terminal may be determined according to a downlink communication parameter of the peripheral terminal. The downlink communication parameter of the peripheral terminal may include a receiving combined vector of the peripheral terminal, a downlink beamforming vector of the base station, a downlink channel coefficient between the peripheral terminal and the base station, a downlink channel coefficient between the peripheral terminal and the plurality of individual reconfigurable intelligence surfaces, a downlink channel coefficient between the base station and the plurality of individual reconfigurable intelligence surfaces, a downlink phase shift and amplitude shift coefficient of the plurality of individual reconfigurable intelligence surfaces, and a downlink penetration loss coefficient of the plurality of individual reconfigurable intelligence surfaces. The downlink noise signal received by the terminal is in complex Gaussian distribution.

The base station, after obtaining the configuration data, may send the configuration data to the terminal. The terminal may perform parameter configuration on the plurality of individual reconfigurable intelligence surfaces according to the configuration data after receiving the configuration data. After the terminal completes the parameter configuration on the plurality of individual reconfigurable intelligence surfaces, the plurality of individual reconfigurable intelligence surfaces may make a preparation for data transfer, so as to implement the uplink or downlink enhancement.

Optionally, after performing the parameter configuration on the plurality of individual reconfigurable intelligence surfaces according to the configuration data, the terminal may also perform at least one of the following operations: data transmission is performed by the plurality of individual reconfigurable intelligence surfaces; or updated channel state information is sent to the base station, wherein the base station performs beam tracking on the plurality of individual reconfigurable intelligence surfaces by means of the updated channel state information.

In some cases, if the operating state of the plurality of individual reconfigurable intelligence surfaces is the folded state, the terminal may implement the uplink enhancement when data transmission is performed by the plurality of individual reconfigurable intelligence surfaces, and meanwhile, the terminal may reduce the its own radio frequency chain emitting power, so as to reduce the radio frequency chain power consumption of the terminal itself. If the operating state of the plurality of individual reconfigurable intelligence surfaces is the unfolded state, the terminal may implement the downlink enhancement when data transmission is performed by the plurality of individual reconfigurable intelligence surfaces, so as to meet a downlink transmission demand of the terminal for itself and the other peripheral communication terminals.

If the terminal has mobility (for example, a position of the mobile terminal frequently varies), the terminal needs to continuously send, to the base station, channel feedback information including the CSI, so that the base station may perform beam tracking on the reconfigurable intelligence surface apparatus according to the feedback information to guarantee continuity of the data transfer. The beam tracking includes beam alignment, beam switching, beam recovery and the like. In addition, multi-time-scale channel customization is performed by configuring the reconfigurable intelligence surface apparatus to customize a rank-controllable singular value decomposition (SVD) channel, and a sound state of multi-user multi-streaming transfer can be guaranteed.

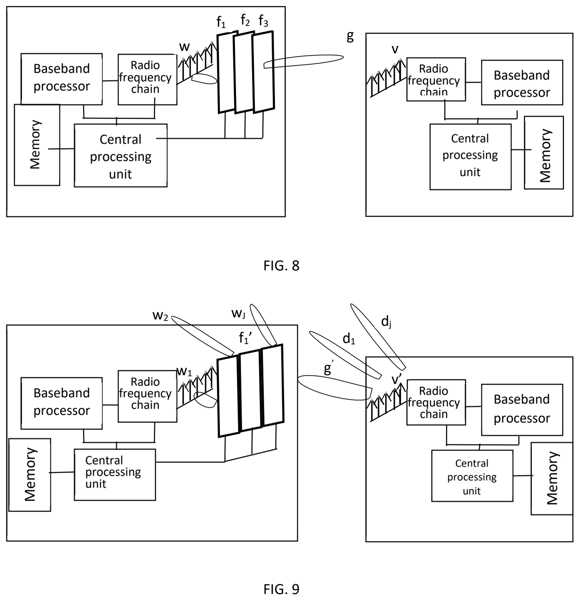

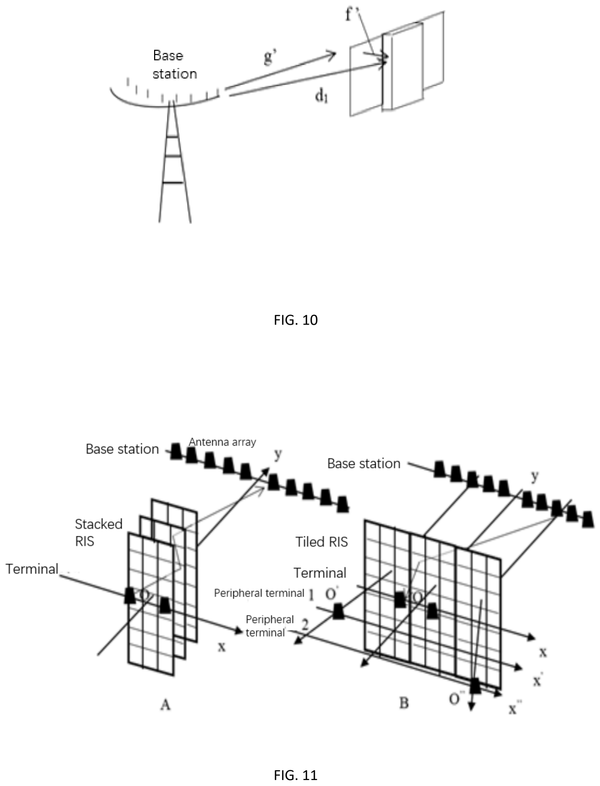

For conveniently understanding the terminal communication method provided by the embodiment of the present application, a reference may be made to embodiments shown in FIG. 8, FIG. 9 and FIG. 10. FIG. 8 is a schematic diagram of a reconfigurable intelligence surface apparatus used for uplink enhancement according to an embodiment of the present application. FIG. 9 is a schematic diagram of a reconfigurable intelligence surface apparatus used for downlink enhancement according to an embodiment of the present application. FIG. 10 is a schematic diagram of a perpendicular incidence diameter and a direct connection diameter of a plurality of individual reconfigurable intelligence surfaces in a single-layer tiled state according to an embodiment of the present application. The embodiments shown in FIG. 8, FIG. 9 and FIG. 10 make illustrations by taking the reconfigurable intelligence surface apparatus including three individual reconfigurable intelligence surfaces as an example.

The quantity of emitting antenna units of the terminal is K, the quantity of receiving antenna elements of the base station is M, and the quantity of electromagnetic units on each metasurface of stacked RIS is N.

When uplink enhancement is performed based on the reconfigurable intelligence surfaces, as shown in FIG. 8, a radio frequency chain of the terminal emits an uplink beamforming vector $w$, $w \in C^{K \times 1}$ the power limit is as

$\| w \|_2^2 \leq P_{\max}$ ($w$ 2-norm squared), only a line of sight (LOS) path is considered, a non line of sight (NLOS) path is negligible, and the uplink signal of the terminal penetrates through multiple layers of transmission-type RISs to reach the base station. An emitting phase shift array of any one layer $i \in N \equiv \{1, 2, ..., I\}$ in the multiple layers of RISs is (a symbol $T$ is transposition):

$$\Theta_i = diag(\theta_i) = diag([\theta_{i,1}, \theta_{i,2}, ..., \theta_{i,N}]^T);$$

where $\theta_{i,n} \in e^{j\varphi i,n}$, $\varphi \in [-\pi, \pi]$, $\theta_{i,n}$ is the phase shift coefficient, which may be independent and continuously adjusted.

A signal acquired by the base station is:

$$y = g^H (\prod_{i=I}^{1} k\Theta_i f_i) ws + n \;;$$

where $s \sim CN(0,1)$, namely, the complex Gaussian distribution with a mean value being 0, real part and imaginary part statistic independence and variances each being 1/2; $g \in C^{N \times M}$ is a channel coefficient between an outermost layer of the reconfigurable intelligence surface apparatus and the base station, and $g^H$ is transposition conjugate thereof; $k$ is a loss coefficient of penetrating through the RIS; $f_1 \in C^{N \times K}$ and $f_i \in C^{N \times N}$ are respectively channel coefficients from the terminal radio frequency chain to an innermost layer of the reconfigurable intelligence surface apparatus, any one layer after a second layer of the reconfigurable intelligence surface apparatus to a next layer and finally to an outermost layer; and $n$ is white Gaussian noise (AWGN) introduced by a $g$ channel.

The base station receives receiving combined vectors $v \in C^{M \times 1}$ of M collected antennas, so an uplink joint received signal of the base station is:

$$z = v^H y = v^H g^H (\prod_{i=I}^{1} k\Theta_i f_i) ws + v^H n \;;$$

where

$$v^H n \in CN(0, \| v^H \|_2^2 \sigma^2).$$

Accordingly, under the condition of maximum transmission power and a phase shift condition, a problem of maximizing the SNR detected by the base station is:

$$\max_{v,\Theta_1,...,\Theta_I,w} SNR = \frac{| v^H g^H (\prod_{i=I}^{1} k\Theta_i f_i) w |^2}{\| v^H \|_2^2 \sigma^2} \;;$$

$$\text{s.t.} \quad \| w \|_2^2 \le P_{\max} , \quad | \theta_{i,n} | = 1, \forall i,n .$$

This is a non-convexity problem that needs to be solved by using an alternative optimization method. That is, alternative optimization is needed for $v, \Theta_1,...,\Theta_I, w$. In a case where an RIS coefficient matrix $\Theta_1,...,\Theta_I$ and a terminal beam forming vector $w$ are fixed, the receiving combined vector $v$ of the base station is optimized, then $v$ and $w$ are fixed, $\Theta_1,...,\Theta_I$ is optimized, and finally, $v$ and $\Theta_1,...,\Theta_I$ are fixed and $w$ is optimized.

Optimizing $v$ needs to use a singular value decomposition (SVD) method, and for a positive semi-definite matrix, a second-best solution is obtained in a mode of rank-1 relaxation solving of a maximum feature vector when necessary.

$\Theta_1,...,\Theta_I$ is optimized, and complementary phase angle that all $\theta_{i,n}$ have is used as a product of the vector, which is an optimal solution.

$w$ is optimized, normalization is performed first for it, a regularized 2-norm is limited to be 1, it is converted to an optimal solution of optimized and normalized $(\prod_{i=I}^{1} k\Theta_i f_i)^H gv$ through a maximal-ratio combining ratio, a solving object needs to be further converted to non-convex second-order constraint second-order programming, then an auxiliary variable is introduced for converting to a convex positive semi-definite matrix, and the second-best solution is obtained by rank-1 relaxation when necessary.

When the terminal performs the downlink enhancement based on the reconfigurable intelligence surface apparatus, as shown in FIG. 9 and FIG. 10, the base station downlink beamforming vector is $v'$, $v' \in C^{P \times 1}$ the power

limit is $\| v' \|_2^2 \le P_{max}$ ($v'$ 2-norm squared), only the LOS path is considered, the NLOS path is negligible, from the base station downlink signal to the terminal, the reconfigurable intelligence surface apparatus is in a single-layer tiled unfolded state, there is no shielding protection, and thus there is not only the cascaded channel from the reconfigurable intelligence surface apparatus to the terminal, but also a direct connection channel ($d_1$ in FIG. 9 and FIG. 10). Then, a signal acquired by the terminal is:

$$y' = (kf'^H \Theta' g' + d_1^H) v' s' + n .$$

The terminal has receiving combined vectors $w_1 \in C^{Q \times 1}$ of Q collected antennas, so a downlink joint received signal of the terminal is:

$$z_1' = w_1^H y = w_1^H (kf'^H \Theta' g' + d_1^H) v' s' + w_1^H n .$$

In the downlink, there are also peripheral terminals that acquire the signal through STAR-RIS transmission, $z_2', ..., z_j'$ , and $z_1'$ have a difference in that it is a far field relative to the reconfigurable intelligence surface apparatus, and path loss is greater. It is processed temporarily according to consistency. Further, the SINR detected by the terminal is:

$$SINR = \frac{| w_1^H (kf'^H \Theta' g' + d_1^H) \; v' |^2}{\sum_{j \neq 1}^{J} | w_j^H (kf'^H \Theta' g' + d_j^H) v' |^2 + \| w_1^H \|_2^2 \; \sigma^2} .$$

For the peripheral terminal, the SINR detected thereby is:

$$SINR = \frac{| w_l^H (kf'^H \Theta' g' + d_l^H) \; v' |^2}{\sum_{j \neq l}^{J} | w_j^H (kf'^H \Theta' g' + d_j^H) v' |^2 + \| w_l^H \|_2^2 \; \sigma^2} , l = 1, ..., J; j = 1, ..., J ;$$

where $d_l$ and $d_j$ are direct connection channels between the peripheral terminal and the base station. In addition, $w_i$, $i = 1, ..., l, ..., j, ..., J$, the receiving combined vector in the unfolded state of the plurality of individual reconfigurable intelligence surfaces in the reconfigurable intelligence surface apparatus, should be marked as $w_i'$ from the perspective of matching other parameters, but there is a subscript $i$, it can be distinguished from the uplink beam forming vector $w$ of the terminal in the folded state, and thus a superscript ' is not added to $w_i$ here.

Accordingly, under the condition of maximum transmission power and a phase shift condition, a problem of maximizing the SINR detected by the terminal is:

$$\max_{v', \Theta_1', w_1} SINR = \frac{| w_1^H (kf'^H \Theta' g' + d_1^H) \; v' |^2}{\sum_{j \neq 1}^{J} | w_1^H (kf'^H \Theta' g' + d_j^H) v' |^2 + \| w_1^H \|_2^2 \; \sigma^2} ;$$

$$\text{s.t.} \; \| w_1 \|_2^2 \le P_{max} , \; | \theta_n | = 1, \forall n, n = 1, ..., N, N+1, ..., 3N .$$

This is still a non-convexity problem that needs to be solved by using an alternative optimization method. That is, alternative optimization is needed for $v'$, $\Theta'$, $w_1$. In a case where the RIS coefficient matrix $\Theta'$ and the base station beamforming vector $v'$ are fixed, the receiving combined vector $w_1$ of the terminal is optimized, then $v'$ and $w_1$ are fixed, $\Theta'$ is optimized, and finally, $w_1$ and $\Theta'$ are fixed and $v'$ is optimized.

Optimizing $w_1$ needs to use the SVD method, and for the positive semi-definite matrix, a second-best solution is acquired in a mode of rank-1 relaxation solving of a maximum feature vector when necessary.

$\Theta'$ is optimized, a continuous solution of $\theta_n$ meeting a unimodular constraint is solved, rounding off is made to obtain a nearest discrete value, and then a primal optimization problem is converted to a binary variable optimization problem to acquire a globally optimal solution.

$v'$ is optimized, normalization is performed first for it, a normalized 2-norm is limited to be 1, it is converted to an optimal solution of optimized and normalized $(k\Theta'g')^H f'w_1 + f_d w_1$ through a maximal-ratio combining ratio, a solving object needs to be further converted to non-convex second-order constraint second-order programming, then an auxiliary variable is introduced for converting to a convex positive semi-definite matrix, and the second-best solution is obtained by rank-1 relaxation when necessary.

Optimization of the peripheral terminal is similar to the optimization process of the terminal. Compared with the uplink, the downlink has interference of other terminals, and actual optimization processing is more complicated. A purpose of the optimization is to implement beamforming of the reconfigurable intelligence surface apparatus with the minimized emitting power in a case of guaranteeing that a signal to interference plus noise ratio of each terminal user reaches the standard.

Uplink enhancement and downlink enhancement signal transfer states of the transmission-type reconfigurable intelligence surface apparatus may also be shown more visually in FIG. 11.

It needs to be noted that switching the downlink enhancement to the uplink enhancement by the terminal through the reconfigurable intelligence surface apparatus is similar to the process of switching from the uplink enhancement to the downlink enhancement shown above in FIG. 8 to FIG. 11, which is not described in detail here.

Optionally, multi-layer stacking and folding and single-layer tiling or non-tiling of the reconfigurable intelligence surface apparatus may also be made to be a vertical supporting mode by enhancing the strength, so as to facilitate space layout optimization of CPE, a vehicle-mounted terminal and smart home, or a tablet computer and a mobile phone may play in a landscape mode with a support.

The area of the above metasurface may be typically applied to the CPE. On the CPE, Sub6GHz may be applied. Taking common CPE as an example, its size may be in a range of 25 cm×15 cm×45 cm, if a single-layer metasurface is covered on the shell, its area is only 45cm×25 cm, a 5.8GHz frequency band is adopted, and there are only 16 rows*30 columns=480 electromagnetic units approximately. After stacking for three layers, the three-layer thickness may be 25 cm × 21 cm × 45 cm (a gap between the three layers of metasurfaces is 2 cm), 1440 electromagnetic units is involved, meanwhile, the power may be effectively increased by adjusting the degree of freedom in amplitude, and a tester has proved that the power consumption is reduced for 50%, which is quite beneficial for the CPE during long-time work in an integrated access backhaul (IAB) state in Internet of Vehicles and home network. However, weak signal scenarios such as strong interference from a neighboring cell and vehicle and building blocking possibly occur in the operating environment of the CPE, in this case, the single-layer area of the outermost layer of the CPE is 45cm×25 cm, the area is not sufficient for the downlink, and the receiving power is not favorable. The area may reach 45cm×75 cm or 135cm×25 cm after tiling, a downlink effect is remarkably enhanced, and a good practical effect is achieved. Thus, by considering downlink enhancement demand in the present application, a better application can also be achieved in a weak signal.

If it is used on the tablet computer, the common area of 10-inch is 24cm×17 cm, three-layer stacking and tiling are barely feasible, and the thickness is already increased and is barely feasible; the area of a 6-inch mobile phone is 13.3cm×7.5cm, at least five-layer stacking and tiling are needed, but due to the thickness, it is not suitable for being made on the shell. In a higher frequency band, there is no problem if it is made in the shell in millimeter wave 80 GHz or above to a terahertz frequency band (an area of a single electromagnetic unit may be smaller).

The terminal in the embodiment of the present application may be in a form such as the mobile phone, the tablet computer, the CPE and smart home. The power consumption is better reduced in general, which meets a demand of a carbon drop situation. Meanwhile, in addition to communication consumption reduction and transfer enhancement, it may also be used for various application scenarios such as uplink and downlink communication sensing integration and wireless energy transfer.

To sum up, flexible scenario application of the terminal may be implemented through the uplink and downlink enhancement switching method of the reconfigurable intelligence surface apparatus on the terminal. In a real communication environment, adopting a plurality of terminals each having the reconfigurable intelligence surface apparatus can enrich a channel propagation environment, reduce millimeter wave channel sparsity and enhance signal propagation multipath, which facilitates relieving transfer difficulty of a non-line-of-sight path.

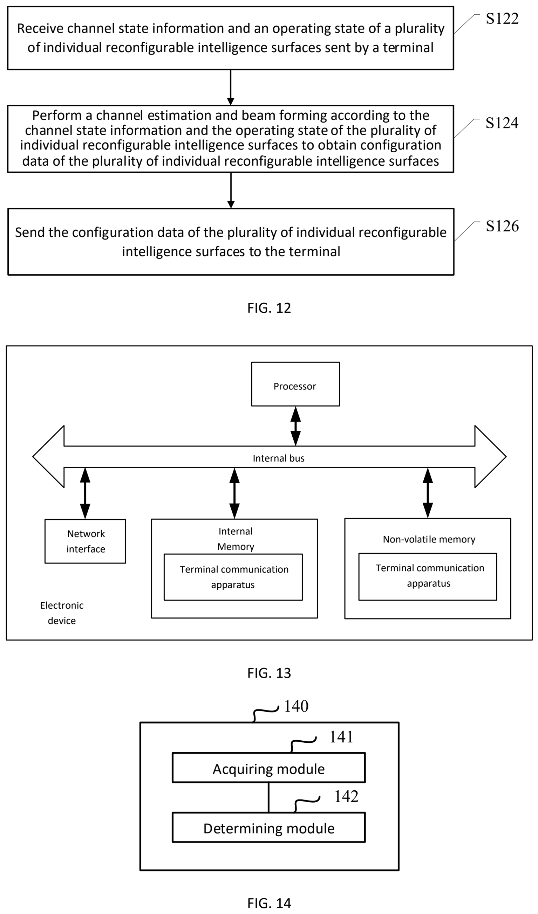

FIG. 12 is a schematic flowchart of a terminal communication method according to an embodiment of the present application. The embodiment shown in FIG. 12 may be applied to a base station. The terminal communication method shown in FIG. 12 includes the following steps.

At S122: channel state information and an operating state of a plurality of individual reconfigurable intelligence surfaces sent by a terminal are received.

The terminal here may be a terminal in which a reconfigurable intelligence surface apparatus provided by the embodiment of the present application is arranged. During the communication of the terminal, after determining the operating state of the plurality of individual reconfigurable intelligence surfaces in reconfigurable intelligence surfaces according to its own communication information, the terminal may send, to the base station, the measured channel state information and the operating state of the plurality of individual reconfigurable intelligence surfaces, and at the moment, the base station may receive the channel state information and the operating state of the plurality of individual reconfigurable intelligence surfaces from the terminal.

The operating state of the plurality of individual reconfigurable intelligence surfaces includes a folded state or an unfolded state. A specific implementation of determining, by the terminal, the operating state of the plurality of individual reconfigurable intelligence surfaces may refer to the corresponding step of the embodiment shown in FIG. 7, which is not described in detail here.

At S124: channel estimation and beam forming are performed according to the channel state information and the operating state of the plurality of individual reconfigurable intelligence surfaces, to obtain configuration data of the plurality of individual reconfigurable intelligence surfaces.

A specific implementation of performing, by the base station, the channel estimation and beam forming may refer to the corresponding content of the embodiment shown in FIG. 7 to FIG. 11, which is not described in detail here.

At S126: the configuration data of the plurality of individual reconfigurable intelligence surfaces is sent to the terminal.

The terminal may perform parameter configuration on the plurality of individual reconfigurable intelligence surfaces according to the configuration data after receiving the configuration data. After completing parameter configuration, the terminal may perform uplink or downlink data transmission through the plurality of individual reconfigurable intelligence surfaces.

Optionally, in a case where the terminal has mobility, the base station may further receive updated channel state information sent by the terminal, and perform beam tracking on the plurality of individual reconfigurable intelligence surfaces based on the updated channel state information, so as to guarantee the continuity of data transmission.

Through the technical solutions provided by the embodiment of the present application, the plurality of individual reconfigurable intelligence surfaces are arranged in the terminal, and the plurality of individual reconfigurable intelligence surfaces have the folded state and the unfolded state. In the folded state, the plurality of individual reconfigurable intelligence surfaces are folded in the terminal. In the unfolded state, the plurality of individual reconfigurable intelligence surfaces extend outwards from the interior of the terminal. Thus, when the terminal has the communication demand, assisting the terminal in performing the uplink communication or the downlink communication can be implemented by folding or unfolding the plurality of individual reconfigurable intelligence surfaces, the plurality of individual reconfigurable intelligence surfaces in the unfolded state can assist the other peripheral terminals of the terminal in performing the downlink communication, and thus the communication environment and states of the terminal and/or the peripheral terminal of the terminal are improved and the communication demands of the terminal and/or the peripheral terminal of the terminal are met. Besides, the plurality of individual reconfigurable intelligence surfaces in the folded state may assist the terminal in performing the uplink communication, so the radio frequency chain emitting power of the terminal may be reduced effectively, and power consumption of the terminal is reduced. The plurality of individual reconfigurable intelligence surfaces in the unfolded state may assist the terminal and/or the peripheral terminal of the terminal in performing the downlink enhancement, so the downlink transmission demand of the terminal for itself and the peripheral terminal of the terminal may be met, and thus the flexible application in complex and ever-changing wireless communication scenarios is implemented.

The specific embodiments of the present application are described above. The other embodiments fall within the scope of the appended claims. In some cases, actions or steps recorded in the claims may be performed in a sequence different from that in the embodiment, which may still achieve expected results. In addition, a specific sequence or consecutive order shown is not necessary in a process described in the accompanying drawings for achieving expected results. In some implementations, multi-task processing and parallel processing may also be permitted or may be favorable.

FIG. 13 is a schematic structural diagram of an electronic device according to an embodiment of the present application. Please refer to FIG. 13, on a hardware level, the electronic device includes a processor, and optionally, further includes an internal bus, a network interface and a memory. The memory may include an internal storage, such as a high-speed random-access memory (RAM), or may also include a non-volatile memory, such as at least one disk memory. Certainly, the electronic device may also include hardware needed by other services.

The processor, the network interface and the memory may be interconnected through the internal bus. The internal bus may be an industry standard architecture (ISA) bus, a peripheral component interconnect (PCI) bus, an extended industry standard architecture (EISA) bus, etc. The bus may be divided into an address bus, a data bus, a control bus, etc. For convenient description, only a double sided arrow is used in FIG. 13, but it does not mean that there is only one bus or a type of bus.

The memory is configured to store a program. Specifically, the program may include a program code, and the program code includes computer operating instructions. The memory may include the internal storage and the non-volatile memory and provide instructions and data for the processor.

The processor reads from the non-volatile memory a corresponding computer program to the internal storage to run the computer program, and a terminal communication apparatus is formed on a logical level. The processor executes the program stored in the memory and is specifically configured to perform the following operations: acquiring communication information of a terminal; and determining an operating state of a plurality of individual reconfigurable intelligence surfaces according to the communication information of the terminal, where the operating state is a folded state or an unfolded state.

The above method performed by the terminal communication apparatus disclosed by the embodiment shown in FIG. 13 in the present application may be applied to the processor or be implemented by the processor. The processor may be an integrated circuit chip and has a signal processing capability. During an implementation process, all the steps in the above method may be completed through an integrated logic circuit of hardware in the processor or instructions in a software form. The above processor may be a general-purpose processor, including a central processing unit (CPU), a network processor (NP), etc.; or may also be a digital signal processor (DSP), an application specific integrated circuit (ASIC), a field-programmable gate array (FPGA) or another programmable logic device, a discrete gate or a transistor logic device, or a discrete hardware component. The respective methods, steps and logic block diagrams disclosed in the embodiments of the present application may be implemented or performed. The general-purpose processor may be a micro-processor or the processor may also be any conventional processor. The steps of the method disclosed in combination with the embodiment of the present application may be directly embodied as being performed and completed by a hardware decoding processor, or being performed and completed by a hardware and software module combination in the decoding processor. A software module may be located in a storage medium mature in the art, such as a random memory, a flash memory, a read-only memory, a programmable read-only memory or an electrically erasable programmable read-only memory, or a register. The storage medium is located in the memory. The processor reads information in the memory and completes the steps of the above method in combination with its hardware.

The electronic device may further perform the method in FIG. 7 and implement a function of the terminal communication apparatus in the embodiment shown in FIG. 7, which is not repeated here in the embodiment of the present application.

Certainly, in addition to a software implementation manner, the electronic device in the present application does not exclude other implementation manners, for example, a logic device or a software and hardware combination manner, in other words, executive bodies of the following processing flows are not limited to the respective logic units and may also be hardware or logic devices.

An embodiment of the present application further provides a computer-readable storage medium. The computer-readable storage medium stores one or more programs. The one or more programs include instructions. The instructions, when executed by a portable electronic device including a plurality of application programs, enable the portable electronic device to perform the method of the embodiment shown in FIG. 7, and the portable electronic device is specifically configured to perform the following operations: acquiring communication information of a terminal; and determining an operating state of a plurality of individual reconfigurable intelligence surfaces according to the communication information of the terminal, where the operating state is a folded state or an unfolded state.

FIG. 14 is a schematic structural diagram of a terminal communication apparatus 140 according to an embodiment of the present application. The terminal communication apparatus 140 is applied to a terminal, and the reconfigurable intelligence surface apparatus provided by the embodiment of the present application is arranged in the terminal. Please refer to FIG. 14, in a software implementation, the terminal communication apparatus 140 may include: an acquiring module 141 and a determining module 142.

The acquiring module 141 acquires communication information of a terminal.

The determining module 142 determines an operating state of a plurality of individual reconfigurable intelligence surfaces according to the communication information of the terminal, where the operating state is a folded state or an unfolded state.

Optionally, the communication information of the terminal includes at least one of a received signal quality parameter of the terminal, whether the terminal receives a downlink enhancement request, whether the terminal receives first information, or a radio frequency chain emitting power of the terminal, wherein the first information is used for indicating that no downlink enhancement demand exists. Determining, by the determining module 142, the operating state of the plurality of individual reconfigurable intelligence surface according to the communication information of the terminal includes: determining that the operating state is the unfolded state in a case where the communication information meets a first condition; or determining that the operating state is the folded state in a case where the communication information meets a second condition.

The communication information meeting the first condition includes at least one of the following: the received signal quality parameter of the terminal is less than a preset threshold; or the terminal receives the downlink enhancement request.

The communication information meeting the second condition includes at least one of the following: the received signal quality parameter of the terminal is greater than or equal to the preset threshold; the radio frequency chain emitting power of the terminal is greater than or equal to preset emitting power; or the terminal receives the first information.

Optionally, the downlink enhancement request includes a downlink enhancement request from a base station and/or a peripheral terminal, and by means of the downlink enhancement request, the base station and/or the peripheral terminal requests the terminal to perform downlink enhancement through the reconfigurable intelligence surface apparatus; and the first information includes first information from the base station and/or the peripheral terminal.

Optionally, the terminal communication apparatus 140 further includes a processing module 143. In a case where the determining module 142 determines the operating state of the plurality of individual reconfigurable intelligence surfaces, the processing module 143 is configured for at least one of the following: reducing the radio frequency chain emitting power of the terminal in a case where the operating state is the folded state; maintaining or increasing the radio frequency chain emitting power of the terminal according to a communication state of the terminal in a case where the operating state is the unfolded state; controlling the plurality of individual reconfigurable intelligence surfaces to be folded in a case where the operating state is the folded state; or controlling the plurality of individual reconfigurable intelligence surfaces to be unfolded in a case where the operating state is the unfolded state.

Optionally, the terminal communication apparatus 140 further includes a sending module 144 and a receiving module 145. In a case where the determining module 142 determines the operating state of the plurality of individual reconfigurable intelligence surfaces, the sending module 144 sends channel state information and the operating state to a base station; the receiving module 145 receives configuration data from the base station, where the configuration data is obtained after the base station performs a channel estimation and beam forming according to the channel state information and the operating state; and the processing module 143 performs parameter configuration on the plurality of individual reconfigurable intelligence surfaces according to the configuration data; wherein in a case where the operating state is the unfolded state, the configuration data is determined according to a signal to interference plus noise ratio of a signal received by the terminal, the signal to interference plus noise ratio is determined according to a downlink signal, a downlink interference signal and a downlink noise signal received by the terminal, the downlink signal is determined according to a downlink communication parameter of the terminal, the downlink interference signal is determined according to a downlink communication parameter of a peripheral terminal, and the downlink noise signal is in complex Gaussian distribution.

Optionally, the terminal communication apparatus 140 further includes a transmission module 146. After the processing module 143 performs the parameter configuration on the plurality of individual reconfigurable intelligence surfaces according to the configuration data, at least one of the following is further included: the transmission module 146 performs data transmission by the plurality of individual reconfigurable intelligence surfaces; or the sending module 144 sends updated channel state information to the base station, where the base station performs beam tracking on the plurality of individual reconfigurable intelligence surfaces by means of the updated channel state information.

The terminal communication apparatus 140 provided by the embodiment of the present application may further perform the method in FIG. 7 and implement a function of the terminal communication apparatus 140 in the embodiment shown in FIG. 7, which is not repeated here in the embodiment of the present application.

An embodiment of the present application further provides a terminal, and the reconfigurable intelligence surface apparatus provided by the embodiment of the present application is arranged in the terminal. In a case where the reconfigurable intelligence surface apparatus is arranged in the terminal, the terminal may communicate by means of the terminal communication method provided by the embodiment of the present application to implement uplink enhancement or downlink enhancement, so as to effectively improve the communication environment and state of the terminal in complex and ever-changing wireless communication scenarios, and meet a communication demand of the terminal. A reference may be made to the embodiments shown above in FIG. 1 to FIG. 11 for detail, which is not described in detail here. Optionally, the terminal may be a mobile terminal or fixed terminal and may specifically include, but is not limited to, CPE, a vehicle-mounted terminal, a mobile phone, a tablet computer, smart home, etc.

To sum up, the above descriptions are only exemplary embodiments of the present application and are not intended to limit the protection scope of the present application. Any modification, equivalent replacement, improvement and the like made within the spirit and principle of the present application should be included in the protection scope of the present application.

A system, apparatus, modules or units described in the above embodiments may be implemented by a computer chip or entity, or implemented by a product with a certain function. A typical implementation device is a computer. Specifically, the computer may be, for example, a personal computer, a laptop computer, a cell phone, a camera phone, a smart phone, a personal digital assistant, a media player, a navigation device, an electronic mail device, a game console, a tablet computer, a wearable device or a combination of any of these devices.

A computer-readable medium includes permanent and non-permanent, and removable and non-removable media capable of implementing information storage through any method or technology. The information may be computer-readable instructions, a data structure, program modules or other data. The computer storage medium includes, but is not limited to, for example, a phase change random access memory (PRAM), a static random access memory (SRAM), a dynamic random access memory (DRAM), other types of random access memories (RAM), a read-only memory (ROM), an electrically erasable programmable read-only memory (EEPROM), a flash memory or other memory technologies, a compact disc read-only memory (CD-ROM), a digital versatile disc (DVD) or other optical storages, cassette tape, magnetic tape and disk storage or other magnetic storage devices or any other non-transmission medium and may be used for storing information that a computing device can access. According to a definition herein, the computer-readable medium does not include transitory computer-readable media, such as modulated data signals and carrier waves.

It needs to be further noted that terms "include", "comprise" or any other variant thereof are intended to cover non-exclusive inclusion, so that a process, method, commodity or device including a series of elements includes not only those elements, but also other elements that are not listed clearly, or further includes inherent elements of the process, method, commodity or device. Without more limitations, an element limited by a statement "including one..." does not exclude a situation that other same elements also exist in a process, method, commodity or device including the element.

Each embodiment in the present application is described in a progressive manner, the respective embodiments can refer to one another for same or similar parts between them, and main illustrations of each embodiment are different from the other embodiments. Especially, for a system embodiment, the system embodiment is basically similar to the method embodiment and thus is simply described, and for related parts, a reference may be made to part of descriptions in the method embodiment.

## Claims

1. A reconfigurable intelligence surface apparatus, arranged in a terminal, and comprising a plurality of individual reconfigurable intelligence surfaces:

   the plurality of individual reconfigurable intelligence surfaces comprise a folded state and an unfolded state;
   in the folded state, the plurality of individual reconfigurable intelligence surfaces are folded in the terminal, and the apparatus is configured to assist the terminal in performing uplink communication; and
   in the unfolded state, the plurality of individual reconfigurable intelligence surfaces extend outwards from an interior of the terminal, and the apparatus is configured to assist the terminal and/or a peripheral terminal of the terminal in performing downlink communication.

2. The apparatus according to claim 1, wherein the apparatus is arranged in a space between a middle frame of the terminal and a shell of the terminal, the shell comprises a wave-absorbing material, the plurality of individual reconfigurable intelligence surfaces comprise a fixed metasurface and a movable metasurface, the fixed metasurface is fixed to a side wall between the middle frame and the shell, and the movable metasurface is capable of moving relative to the fixed metasurface;

   wherein in the folded state, the movable metasurface is stacked on an upper layer and/or a lower layer of the fixed metasurface, and the shell is configured to shield external interference; and
   in the unfolded state, the movable metasurface extends outwards from an interior of the space between the middle frame and the shell of the terminal to one side or two sides of the fixed metasurface.

3. The apparatus according to claim 2, wherein a crawler belt surrounds a side end of the fixed metasurface, the crawler belt is driven by a first motor to rotate around the fixed metasurface, and the movable metasurface is driven by the crawler belt to move relative to the fixed metasurface;
   wherein the crawler belt, when rotating around the fixed metasurface, drives the movable metasurface to be folded and stacked on the upper layer and/or the lower layer of the fixed metasurface, or drives the movable metasurface to extend outwards from the interior of the space between the middle frame and the shell of the terminal.

4. The apparatus according to claim 3, wherein a control apparatus is arranged in the space between the middle frame and the shell and configured to control the movable metasurface to move during extending of the movable metasurface, and/or control and adjust an included angle between the movable metasurface and the fixed metasurface after extending of the movable metasurface.

5. The apparatus according to claim 3, wherein in the folded state, a plurality of movable metasurfaces are stacked on the upper layer or the lower layer of the fixed metasurface, the plurality of movable metasurfaces are folded and stacked on the upper layer or the lower layer of the fixed metasurface, the plurality of movable metasurfaces are connected through a torsional spring hinge, and a second motor is arranged at the torsional spring hinge;

wherein for switching from the folded state to the unfolded state, the crawler belt drives the plurality of movable metasurfaces to extend, and the second motor drives the torsional spring hinge to unfold the plurality of movable metasurfaces and/or adjust an included angle between the plurality of movable metasurfaces; and

for switching from the unfolded state to the folded state, the second motor drives the torsional spring hinge to stack and fold the plurality of movable metasurfaces, and the crawler belt drives the plurality of movable metasurfaces to move into the space between the middle frame and the shell of the terminal and be stacked on the upper layer or the lower layer of the fixed metasurface.

6. The apparatus according to claim 1 or 2, wherein the folded state is a default state of the plurality of individual reconfigurable intelligence surfaces;

the unfolded state comprises at least one of a single-layer tiled state or a single-layer non-tiled state; and in the folded state and the unfolded state, the plurality of individual reconfigurable intelligence surfaces have a transmission function.

7. A terminal communication method, applied to a terminal, the reconfigurable intelligence surface apparatus according to any one of claims 1 to 6 arranged in the terminal, and the method comprises:

acquiring communication information of the terminal; and
determining an operating state of a plurality of individual reconfigurable intelligence surfaces according to the communication information of the terminal, wherein the operating state is a folded state or an unfolded state.

8. The method according to claim 7, wherein the communication information of the terminal comprises at least one of a received signal quality parameter of the terminal, whether the terminal receives a downlink enhancement request, whether the terminal receives first information, or a radio frequency chain transmitting power of the terminal, wherein the first information is used for indicating that no downlink enhancement demand exists; and determining the operating state of the plurality of individual reconfigurable intelligence surfaces according to the communication information of the terminal comprises:

determining that the operating state is the unfolded state in a case where the communication information meets a first condition; or
determining that the operating state is the folded state in a case where the communication information meets a second condition;
wherein the communication information meeting the first condition comprises at least one of the following:

the received signal quality parameter of the terminal is less than a preset threshold; or the terminal receives the downlink enhancement request; and
the communication information meeting the second condition comprises at least one of the following:
the received signal quality parameter of the terminal is greater than or equal to the preset threshold; the radio frequency chain transmitting power of the terminal is greater than or equal to preset transmitting power; or the terminal receives the first information.

9. The method according to claim 8, wherein the downlink enhancement request comprises a downlink enhancement request from a base station and/or a peripheral terminal, and by means of the downlink enhancement request, the base station and/or the peripheral terminal requests the terminal to perform downlink enhancement through the reconfigurable intelligence surface apparatus; and
the first information comprises first information from the base station and/or the peripheral terminal.

10. The method according to claim 7 or 8, wherein in a case where the operating state of the plurality of individual reconfigurable intelligence surfaces is determined, the method further comprises at least one of the following:

reducing a radio frequency chain transmitting power of the terminal in a case where the operating state is the folded state;
maintaining or increasing the radio frequency chain transmitting power of the terminal according to a communication state of the terminal in a case where the operating state is the unfolded state;
controlling the plurality of individual reconfigurable intelligence surfaces to be folded in a case where the operating state is the folded state; or

controlling the plurality of individual reconfigurable intelligence surfaces to be unfolded in a case where the operating state is the unfolded state.

11. The method according to claim 7 or 8, wherein in a case where the operating state of the plurality of individual reconfigurable intelligence surfaces is determined, the method further comprises:

sending channel state information and the operating state to a base station;

receiving configuration data from the base station, wherein the configuration data is obtained after the base station performs a channel estimation and beam forming according to the channel state information and the operating state; and

performing parameter configuration on the plurality of individual reconfigurable intelligence surfaces according to the configuration data;

wherein in a case where the operating state is the unfolded state, the configuration data is determined according to a signal to interference plus noise ratio of a signal received by the terminal, the signal to interference plus noise ratio is determined according to a downlink signal, a downlink interference signal and a downlink noise signal received by the terminal, the downlink signal is determined according to a downlink communication parameter of the terminal, the downlink interference signal is determined according to a downlink communication parameter of a peripheral terminal, and the downlink noise signal is in complex Gaussian distribution.

12. The method according to claim 11, wherein after performing parameter configuration on the plurality of individual reconfigurable intelligence surfaces according to the configuration data, the method further comprises at least one of the following:

performing data transmission by the plurality of individual reconfigurable intelligence surfaces; or

sending updated channel state information to the base station, wherein the base station performs beam tracking on the plurality of individual reconfigurable intelligence surfaces by means of the updated channel state information.

13. An electronic device, comprising:

a processor; and

a memory, configured to store processor-executable instructions;

wherein the processor is configured to execute the instructions to implement the method according to any one of claims 7 to 12.

14. A computer-readable storage medium, wherein instructions in the storage medium, when executed by a processor of an electronic device, cause the electronic device to perform the method according to any one of claims 7 to 12.

15. A terminal, wherein the reconfigurable intelligence surface apparatus according to any one of claims 1 to 6 is arranged in the terminal.

Terminal
11

Reconfigurable intelligence
surface apparatus 10

A plurality of individual
reconfigurable intelligence
surfaces 101
(including a folded state and an
unfolded state)

FIG. 1

FIG. 2

FIG. 3

FIG. 4

FIG. 5

FIG. 6

| | |
|---|---|
| Acquire communication information of a terminal | S702 |

| | |
|---|---|
| Determine an operating state of a plurality of individual reconfigurable intelligence surfaces according to the communication information of the terminal, wherein the operating state is a folded state or an unfolded state | S704 |

FIG. 7

FIG. 8

FIG. 9

FIG. 10

FIG. 11

Receive channel state information and an operating state of a plurality of individual reconfigurable intelligence surfaces sent by a terminal

S122

Perform a channel estimation and beam forming according to the channel state information and the operating state of the plurality of individual reconfigurable intelligence surfaces to obtain configuration data of the plurality of individual reconfigurable intelligence surfaces

S124

Send the configuration data of the plurality of individual reconfigurable intelligence surfaces to the terminal

S126

FIG. 12

Processor

Internal bus

Network interface

Internal Memory

Terminal communication apparatus

Non-volatile memory

Terminal communication apparatus

Electronic device

FIG. 13

140

141

Acquiring module

142

Determining module

FIG. 14

## INTERNATIONAL SEARCH REPORT

| International application No. |
|---|
| **PCT/CN2024/080023** |

| A. | CLASSIFICATION OF SUBJECT MATTER |
|---|---|

H04L25/02(2006.01)i;  H04L67/104(2022.01)i;  H04W4/70(2018.01)i

According to International Patent Classification (IPC) or to both national classification and IPC

| B. | FIELDS SEARCHED |
|---|---|

Minimum documentation searched (classification system followed by classification symbols)

　　IPC: H04L H04W H04B

Documentation searched other than minimum documentation to the extent that such documents are included in the fields searched

Electronic data base consulted during the international search (name of data base and, where practicable, search terms used)

　　CNTXT, ENTXT, CNKI, WPABS, BING: 智能, 智慧, 可重新配置, 可重构, 反射面, 表面, Reconfigurable, Intelligence, reflect, Surface, RIS, IRS, 内, 集成, 一体, 包括, inside, Integrate, include, 展开, 延展, 折叠, 收缩, 收起, 收拢, 收放, 伸出, 收合, expansion, fold, unfold, retract, spread

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115967925 A (HONOR TERMINAL CO., LTD.) 14 April 2023 (2023-04-14) description, paragraphs 137-141 and 168-242 | 1-15 |
| A | WO 2023028409 A1 (QUALCOMM INC.) 02 March 2023 (2023-03-02) entire document | 1-15 |
| A | CN 115632913 A (TSINGHUA UNIVERSITY) 20 January 2023 (2023-01-20) entire document | 1-15 |
| A | WO 2022183310 A1 (QUALCOMM INC.) 09 September 2022 (2022-09-09) entire document | 1-15 |
| A | WO 2022133958 A1 (HUAWEI TECHNOLOGIES CO., LTD.) 30 June 2022 (2022-06-30) entire document | 1-15 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 May 2024** | **05 June 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/080023**

| Patent document cited in search report | | | Publication date (day/month/year) | Patent family member(s) | | | Publication date (day/month/year) |
|---|---|---|---|---|---|---|---|
| CN | 115967925 | A | 14 April 2023 | None | | | |
| WO | 2023028409 | A1 | 02 March 2023 | KR | 20240046874 | A | 11 April 2024 |
| | | | | US | 2023068083 | A1 | 02 March 2023 |
| | | | | CN | 117837100 | A | 05 April 2024 |
| CN | 115632913 | A | 20 January 2023 | None | | | |
| WO | 2022183310 | A1 | 09 September 2022 | EP | 4302412 | A1 | 10 January 2024 |
| | | | | BR | 112023016787 | A2 | 05 December 2023 |
| | | | | KR | 20230149298 | A | 26 October 2023 |
| | | | | US | 2024048188 | A1 | 08 February 2024 |
| | | | | CN | 116897512 | A | 17 October 2023 |
| WO | 2022133958 | A1 | 30 June 2022 | EP | 4241385 | A1 | 13 September 2023 |
| | | | | EP | 4241385 | A4 | 10 January 2024 |
| | | | | US | 2023308140 | A1 | 28 September 2023 |
| | | | | MX | 2023007598 | A | 10 July 2023 |
| | | | | CN | 116648861 | A | 25 August 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310773308